Europäisches Patentamt

European Patent Office

Office européen des brevets

(19)

(11) **EP 1 304 628 A2**

(12) **EUROPEAN PATENT APPLICATION**

(43) Date of publication:
**23.04.2003 Bulletin 2003/17**

(51) Int Cl.[7]: **G06F 17/30**

(21) Application number: **02256820.8**

(22) Date of filing: **01.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **19.10.2001 JP 2001322490**

(71) Applicant: **Pioneer Corporation**
**Meguro-ku, Tokyo (JP)**

(72) Inventors:
• **Suzuki, Yasunori, c/o Pioneer Corporation**
**Tsurugashima-shi, Saitama (JP)**

• **Ichihara, Naohiko, c/o Pioneer Corporation**
**Tsurugashima-shi, Saitama (JP)**
• **Odagawa, Satoshi, c/o Pioneer Corporation**
**Tokyo (JP)**
• **Kodama, Yasuteru, c/o Pioneer Corporation**
**Tokyo (JP)**
• **Shioda, Takehiko, c/o Pioneer Corporation**
**Tokyo (JP)**

(74) Representative: **Haley, Stephen**
**Gill Jennings & Every,**
**Broadgate House,**
**7 Eldon Street**
**London EC2M 7LH (GB)**

(54) **Method and apparatus for selecting and reproducing information**

(57) A sensitivity table is prepared, and this sensitivity table contains correlative values between respective retrieve keywords (for example, "cheerful music piece", and "refreshing music piece") and respective feature words (for instance, "cheerful" and "vitality"), and also may be updated. A feature word list is prepared in which symbols "1" and "0" denote as to whether or not a feature related to each of these feature words is present. When a user inputs a desirable retrieve key, a plurality of music pieces which are fitted to this retrieve key are selected on the basis of both the sensitivity table and the feature word list. A feature in sensitivities of the user is extracted in a quantitative manner by a statistical manner by judging as to whether or not these music pieces are skipped by the user on the basis of individual judgment by the user. The correlative values of the sensitivity table are updated based upon this feature.

*FIG. 3*

EP 1 304 628 A2

**Description**

The present disclosure relates to the subject matter contained in Japanese Patent Application No. 2001-322490 filed on October 19, 2001, which are incorporated herein by reference in its entirety.

The present invention generally relates to a technical field as to an information selecting apparatus and an information selecting method, which may select information corresponding to each of personal sensitivities by way of a problem solving manner by learning (will be sometimes referred to as "learning algorithm"). More specifically, the present invention relates to a technical field as to such an information selecting apparatus and information selecting method, which may be suitably used to select music pieces in an audio apparatus in correspondence with the respective personal sensitivities, and may properly select information in correspondence with each of personal sensitivities based upon the learning algorithm. Furthermore, the present invention is related to an information selecting/reproducing apparatus equipped with such an information selecting apparatus, and a computer program used to select information.

Conventionally, selections of optimum information have been desired, while the selected information is different from each other, depending upon sensitivities of personals (will be referred to as "individual sensitivities" hereinafter). For instance, optimum music piece selections are desired in accordance with individual sensitivities. As to this optimum music piece selection, for instance, when music data stored in a car stereophonic system are reproduced (e. g., compressed music data/MPEG-1 Audio Layer-3/MP-3 stored in CD-ROM and hard disk are reproduced), while a user drives, or stops the own car, music pieces are selected based upon desires of this user, namely an individual sensitivity in correspondence with ambient conditions. For example, at a bustling place and/or in a bustling atmosphere, there are many possibilities that "cheerful and good accompaniment music (music pieces)" are desirably reproduced. Otherwise, in a silent place and/or in a silent atmosphere, there are many opportunities that "moody music (music pieces)" are wanted to be reproduced.

As such a music selecting method, a technical idea using a memory table (lookup table LUT) is already known in this field. In this technical idea, in response to a selective user input instruction, for example, in response to an input instruction of cheerful music pieces, these cheerful music pieces are selected to be reproduced based upon a previously-set table.

This music piece selecting operation by using the table in response to the individual sensitivity is carried out based upon fixed data. For instance, such a music piece selection operation is performed based upon data which has been obtained by averaging a very large number of experimental data and a very great number of questionnaires. As a result, the following music piece selecting and reproducing operations cannot be carried out by reflecting deviation of individual sensitivities different from each other, in particular, by reflecting present feelings (moods) of users in response to feeling ways specific to users. However, as one of examples in which music piece selecting operation may be carried out in correspondence with such a deviation of individual sensitivities of users, a neural network has been proposed.

In this neural network resembled to an artificial intelligent (AI) processing operation, while a nonlinear map is produced based upon individual sensitivities (for example, desirable music piece selections) and physical amounts (for instance, actual music piece selections), sensitivities of individuals which cannot be quantified in a simple manner may be quantified and then, the values of these quantified sensitivities may be used as an algorithm form. In other words, this neural network may select the music pieces which are properly fitted to the deviation in different sensitivities of these users.

However, in the above-described various conventional techniques own the below-mentioned problems.

First, in the conventional technique using the memory table, the information (music pieces) selecting operation based upon the table is carried out in the fixed manner. As a result, the information (music pieces) cannot be selected which is fitted to the deviation in the sensitivities of the different users. For instance, since the music pieces are selected based on such data which have been acquired by averaging a large number of experimental data as well as a large quantity of questionnaires, there is a drawback that the music pieces which are fitted to the present feelings (moods) of users cannot be properly selected in response to the deviation in the sensitivities of the different individuals.

Also, the information selection (music piece selection) program using the table has been previously stored in a microcomputer (MPU) and the like. This information selection program cannot be changed at the user stage after the shipment from the factory. For instance, while a user drives a vehicle, this user cannot change the content of this table in accordance with atmospheres in this vehicle and environments around this vehicle. In other words, this conventional technique owns such a drawback that the content of this table cannot be changed in order to be fitted to the deviation in the sensitivities of these different users.

On the other hand, in the conventional technical system using the neural network, the teacher data should be necessarily entered so as to learn the individual emotions. However, such a fact as to whether or not learning of this system is converged may depend on the way how to apply the teacher data by the user, or the dimension of the coincident degree with respect to the retrieve keyword. As a result, there is such a drawback that the system may not be always optimized. It should be understood that the algorithm established based upon this neural network has been conceived in the logical idea stage, but no concrete example capable of actually selecting proper music pieces could be so far developed and/or proposed.

The present invention has been made to solve the above-described problems of the prior art, and therefore has an object to provide an information selecting apparatus, and an information selecting method, capable of easily and firmly executing an information selecting operation based upon a problem solving method, namely learning algorithm within relatively short time in correspondence with individual sensitivities. Also, another object of the present invention is to provide an information selecting/reproducing apparatus equipped with such an information selecting apparatus, and a computer program used to select information.

To solve the above described problems, an information selecting apparatus according to embodiments of the invention, a feature word list containing a plurality of index values of a plurality of feature words previously set and indicative of various sorts of featured contents of a plurality of contents information including at least one of voice information, picture information, and text information, user-dependable sensitivity tables, which can be updated and include a plurality of correlative values between the plurality of feature words and a plurality of retrieve keywords used to retrieve the plurality of contents information, input means capable of inputting a desirable retrieve keyword among the plurality of retrieve keywords, selection means operated in such a manner that when one retrieve keyword is entered by the input means, at least one contents information, which is coincident with the one retrieve keyword, is selected from the plurality of contents information on the basis of both the sensitivity table and the feature word list, judgment means for judging as to whether or not each of the selected contents information is coincident with the one retrieve keyword on the basis of an individual judgment by a user, first statistical processing means for quantifying relevancy between the one retrieve keyword and each of the plurality of characteristic keywords, with respect to the contents information judged to be coincident with the one retrieve keyword by the judgement means, in a statistical manner based on the index values with respect to the feature words stored in the corresponding feature word list to obtain a coincident index amount, second statistical processing means for quantifying relevancy between the one retrieve keyword and each of the plurality of characteristic keywords, with respect to the contents information judged not to be coincident with the one retrieve keyword by the judgement means, in a statistical manner based on the index values with respect to the feature words stored in the corresponding feature word list to obtain a incoincident index amount, calculation means for calculating a new correlative values between the one retrieve keyword and the plural feature words, respectively, based on the coincident index amount and the incoincident index amount, and update means for updating a portion of the sensitivity table, which is related to the one retrieve keyword, by using the new correlative value calculated by the calculation means.

In accordance with the information selecting apparatus of the present invention, before the actual selecting operation is carried out, a feature word list is prepared for each of users. This feature word list contains index values with respect to such a feature word as "cheerful", "dark", "joyful", "vitality", and "good accompaniment" as to each of contents information. In other words, since each of the users sets the index values of the feature words as to the respective plural contents information which constitute a population of a selecting operation, the respective contents information can be featured. In this case, an index value implies such a binary value, or a value of either "1" or "0" which indicate as to whether or not, for instance, a feature indicated by this feature word is present. Furthermore, before the actual selecting operation is carried out, a sensitivity table containing retrieve keywords and correlative values among the feature words is prepared for each of these users. This sensitivity table may be updated, and may be properly updated based upon the below-mentioned learning algorithm in response to an individual sensitivity of a user. It is so assumed that as an initial state, a general-purpose default value which does not depend on individual users has been set. Also, each of these users starts to use this information selecting apparatus, or actually uses this information selecting apparatus, it is so assumed that such a sensitivity table is present, the content of which has been updated by reflecting thereon the selecting operations executed up to the preceding selecting operation.

Thereafter, while the selecting operation is actually carried out, when a desirable one retrieve keyword is entered via the input means by each of these users, at least one of the plurality of contents information which is coincident with this one retrieve keyword is selected from the plurality of contents information on the basis of the sensitivity table and the feature word list by the selecting means. For instance, assuming now that "cheerful contents information" is entered as the retrieve keyword, a correlative value between this retrieve keyword and the respective feature words is checked from the sensitivity table. Further, index values of feature words in the respective contents information are checked from the feature word list. For instance, such contents information having higher scores is selected based upon scores calculated by a preselected formula while these correlative values and index values are used as variables. That is to say, the at least one of the plurality of contents information which is coincident with this one retrieve keyword is selected from the plurality of contents information on the basis of both the sensitivity table and the feature word list by the selecting means.

Subsequently, the judgement.means judges as to whether or not each of this selected the at least one of the plurality of contents information is coincident with this one retrieve keyword on the basis of an individual judgement made by a user. In this case, the judgement means judges as to whether or not each of the plurality of contents information is coincident with one retrieve keyword in response to such an input operation for checking as to whether or not each of the contents information coincident with one retrieve keyword is selected by a user.

In this case, the first statistical processing means is operated in such a manner that as to such a contents information which is judged to be coincident with this one retrieve keyword by the judgement means, the correlative characteristic between the one retrieve keyword and each of the plural feature words is quantified so as to acquire the coincident index amount by way of the statistical manner based upon the index value in the feature word stored in the feature word list corresponding to each of the contents information. On the other hand, the second statistical processing means is operated in such a manner that as to such a contents information which is judged to be not coincident with this one retrieve keyword by the judgement means.,. the correlative characteristic between this one retrieve. keyword and each of the plural feature words is quantified so as to acquire the incoincident index amount by way of the statistical manner based upon the index value in the feature word stored in the feature word list corresponding to each of the contents information. Then, the calculation means calculates the new correlative value between this one retrieve keyword and each of the plural feature words, respectively, based upon both the coincident index amount and the incoincident index amount.

Finally, the update means updates a portion of the sensitivity table, which is related to this one retrieve keyword, by employing the new correlative value calculated by the calculation means.

As a consequence, since the updating operation of the table portions of the user-dependable sensitivity tables in response to such an input of one retrieve keyword is repeatedly carried out, the contents of these user-dependable sensitivity tables can be fitted to the sensitivities of the individual users. As a result, the automatic selecting operation by the selection means can be easily and firmly carried out in response to the sensitivities of individual users by employing the sensitivity tables which are sequentially updated.

Also, similar to the example of the above-described neural network, there is no need to suppose that the system cannot be completely converged, but the stable system can be firmly constructed.

In an information selecting apparatus according to another aspect of the present invention, the selection means places the plurality of contents information in the order of coincident degree with the one retrieve keyword on the basis of the sensitivity table and the feature word list and the selection means selects at least one contents information, the coincident degree orders of which are upper-grade orders.

According to this embodiment, this selection means applies the coincident degree orders to the plurality of contents information coincident with this one retrieve keyword on the basis of both the sensitivity table and the feature word list so as to select this one, or plural contents information. For instance, assuming now that "cheerful contents information" is entered as the retrieve keyword, a correlative value between both this retrieve keyword and the respective feature words is checked from the sensitivity table. Further, index values of feature words in the respective contents information are checked from the feature word list. For instance, such contents information having higher scores is selected based upon scores calculated by a preselected formula while these correlative values and index values are used as variables. That is to say, the selection means applies the orders equivalent to this retrieve keyword to the cheerful contents information.

As a consequence, while only such contents information whose orders are upper-grades is directed by the selection means, the judgement means judges as to whether or not this contents information is coincident with one retrieve keyword. Therefore, the user-dependable sensitivity tables can be updated in a higher efficiency.

Alternatively, in accordance with the embodiment in which this selection means applies the orders, the selection means may calculate a summation of values obtained by multiplying each of the correlative values in the sensitivity table by the index values in the corresponding feature word with respect to each of the plural contents information and the selection means may place the plurality of contents information in the order of the summation values.

Since such an arrangement is made, the selection means applies the orders to the contents information by checking whether the summation of the values obtained by multiplying each of the correlative values and the index value in the feature word in the sensitivity table is large, or small. As a result, the selection means can relatively easily select the information to which the sensitivities of the individual users are reflected in these orders.

Alternatively, in accordance with the embodiment in which this selection means applies orders, the selection means may take into consideration coincident degree of another retrieve keyword with the plurality of contents information, the another retrieve keyword having a predetermined relation with the one retrieve keyword, when the selection means places the plurality of contents information in the order of the coincident degree with the one retrieve keyword..

With employment of such an arrangement, if the selection means applies the orders corresponding to other retrieve keywords, then this selection means can apply the orders to the contents information when one retrieve keyword having a predetermined relationship with the other keywords is thereafter entered, while taking into amount this ordering operation. In other words, while either the sensitivity-to-sensitivity learning or the emotion-to-emotion learning related to the respective users is carried out, the sensitivity table may be fitted to the sensitivities of the individual users.

Furthermore, in this case, the selection means may take into consideration the coincident degree of the another retrieve keyword with the plurality of contents information based on a previously-set retrieve keyword-to-keyword correlative degree indicating degree of the predetermined relationship among the plural retrieve keywords, when the selection means places the plurality of contents information in the order of the coincident degree with the one retrieve. keyword.

With employment of such an arrangement, the correlative degree among the retrieve keywords is previously set which indicates a preselected relationship degree among a plurality of retrieve key words. As a result, the coincident degree to another retrieve keyword can be relatively easily considered based upon the correlative degree among the retrieve keywords with respect to the coincident degree with respect to one retrieve keyword. For instance, in the case that the retrieve keyword-to-keyword correlative degree between two retrieve keywords, namely "cheerful contents information" and "energetic contents information" is conducted as 0.5 based upon coincident degrees of contents which are mutually arranged in the order of sores, a value obtained by multiplying a score with respect to the other retrieve keyword "cheerful contents information" by 0.5 is added to a score with respect to one retrieve keyword "energetic contents information", and thus, the added score may be employed as the store with respect to this one retrieve keyword "energetic contents information." As a consequence, either the motion-to-motion learning or the sensitivity-to-sensitivity learning related to the individual users may be carried out in a relatively simple manner.

In an information selecting apparatus according to another aspect of the present invention, the calculation means calculates a normalized correlative value as the correlative value.

In accordance with this embodiment, since the calculation means calculates the normalized correlative value, the contents of the sensitivity table may be updated while the relative large/small relationship among the plural correlative values in the sensitivity table may be maintained before/after the updating operation thereof.

In an information selecting apparatus according to another aspect of the present invention, the calculation means calculates the correlative value by inverting the symbol of the incoincident index amount and adding the symbol-inverted incoincident index amount to the coincident index amount.

In accordance with this embodiment, one correlative value may be calculated by way of a relatively simple calculation manner. That is to say, after the symbol of the incoincident index amount has been inverted, this symbol-inverted incoincident index amount is added to the coincident index amount from both the coincident index amount and the incoincident index amount, which have been calculated by the statistical manner as to both the contents information which is judged to be coincident with one retrieve keyword by the judgement means, and the content information which is judged to be not coincident with one retrieve keyword by this judgement means.

In an information selecting apparatus according to another aspect of the present invention, the update means updates the sensitivity table by weighting and adding the calculated new correlative value to the correlative value corresponding thereto, which is stored in the sensitivity table.

In accordance with this embodiment, the sensitivity table is not updated by employing only the new correlative value which has been calculated based upon the latest judgement result. In other words, the sensitivity table is updated in such a manner that this new correlative value is processed by a proper weighting factor, the presently-existing correlative value which has been stored in the presently-existing sensitivity table is processed by a proper weighting factor based upon the past judgement result as to the same user, and then, both these weighted correlative values are added to each other. As a result, the updated sensitivity table may be formed onto which not only the latest judgement result is reflected, but also the past judgement result is reflected.

In an information selecting apparatus according to another aspect of the present invention, the index value of the feature word is constituted by two values indicating as to whether or not a feature is present.

In accordance with this embodiment, since the indent value of the feature word is made of the two values which indicates as to whether or not the feature is present, the structure of the feature word list can be made simple, for instance, a value "1" indicates that the feature thereof is present, or another value "0" represents that the feature thereof is not present. Furthermore, the correlative characteristic may be quantified by both the first and second statistical processing means based upon the index value of the feature word in a simple manner.

It should be understood that index values of such a feature word may be defined as normalized real numbers "0" to "1", or normalized real numbers "-1" to "+1", which are changed based upon existence degrees of features, or degrees of features in accordance with sensitivities of individual users. For example, such a condition that there is completely no feature is indicated as "0.0"; such a condition that there is a small feature is represented as "0.25"; such a condition that there is a certain feature is indicated as "0.5"; and such a condition that there are large features is indicated as "0.75"; and also such a condition that there are extremely large features is represented as "1.0.".

In an information selecting apparatus according to another aspect of the present invention, the first statistical processing means calculates a positive coincident index amount as to such a feature word to which the index value is designated by the user when the feature word list is set. The first statistical processing means calculates a negative coincident index amount as to such a feature word to which the index value is not designated by the user. The first statistical processing means adds the positive coincident index amount and the negative coincident index amount by giving an essentially large weight to the positive coincident index amount as compared with the negative coincident index amount, to calculate the coincident index amount.

In accordance with this embodiment, the first statistical processing means calculates the positive coincident index amount as to such a feature word to which the index value designated by the user when the feature word list is set, for instance, as to such a feature word to which "1" (there is a certain feature) is set as an index value. The first statistical processing means calculates a positive coincident index amount "S1" in such a manner that, for example, a total number of "1" is calculated, and this total number is multiplied by a predetermined coefficient "a" (this coefficient "a" being real number larger than "0").

On the other hand, as to the feature word to which the index value is not designated by the user when the feature word list is set, it is so regarded that a passive feature is potentially present, the first statistical processing unit calculates a negative coincident index amount. For example, as to such a feature word having an index value of "0" (namely, there is no feature), namely, as to such a feature into which the index value of "1" (namely there is certain feature) is not actively inputted, a negative coincident index value is calculated. For example, a negative coincident index amount "S2" is calculated as to such a feature word which is predicted as a feature word having a strong feature, because appearance numbers of "0" are extremely large among arrays of "1" and "0" of the index values in the feature words related to a plurality of contents information which are judged to be coincident with one retrieve keyword, it becomes a predetermined coefficient "-b" (noted that this coefficient "b" is real number larger than "0"), and furthermore, as to such a feature word which is predicted as a'feature word having substantially no feature, because appearance numbers of the index value "0" are not largely different from appearance numbers of the index value "1", it becomes a value "0."

A positive coincident index amount "S1" with respect to each pair between the retrieve keyword and the feature word, which is calculated in the above-described manner, may constitute such an index indicative of a height of a positive correlation having this feature word (for instance "cheerful" ) with respect to this retrieve keyword (for example, "cheerful contents information") in view of a sensitivity of a user. On the other hand, a negative coincident index amount "S2" with respect to each pair between the retrieve keyword and the feature word, which is calculated in the above-described manner, may constitute such an index indicative of a height of a positive correlation which is owned by a counter sensitivity (for example, sensitivities specific to respective users, which are substantially resembled to "cheerful") of this word (for instance "dark") with respect to this retrieve keyword (for example, "cheerful contents information") in view of a sensitivity of a user.

Then, a coincident index amount which is coincident with, for example, S1 + S2 is calculated in such a manner that the former value is processed by applying thereto a larger weight factor than a weight factor of the latter value, and then, both the weight-processed former value and latter value are added to each other. In other words, as to such a feature word which is actively judged as a feature word having a certain feature by a user, an evaluation as a structural factor is increased so as to calculate a final coincident index amount (for example, S1 + S2), as compared with another feature word which is actively judged as a feature word having no feature.

In this embodiment, the first statistical processing means may calculate the negative coincident index amount based upon an index value of a feature word in which a fluctuation in mean deviation is smaller than a predetermined threshold value.

When the information selecting apparatus is arranged in the above-described manner, the negative coincident index amount "S2" may be obtained in a relatively easy manner that as to such a feature word which is predicted as a feature word having a strong feature, because appearance numbers of "0" are extremely large among arrays of "1" and "0" of the index values in the feature words related to a plurality of contents information which are judged to be coincident with one retrieve keyword, it becomes a predetermined coefficient "-b", and furthermore, as to such a feature word which is predicted as a feature word having substantially no feature, because appearance numbers of the index value "0" are not largely different from appearance numbers of the index value "1", it becomes a value "0."

In an information selecting apparatus according to another aspect of the present invention, the second statistical processing means calculates a positive incoincident index amount as to such a feature word to which the index value is designated by the user when the feature word list is set. The second statistical processing means calculates a negative incoincident index amount as to such a feature word to which the index value is not designated by the user. The second statistical processing means adds the positive incoincident index amount and the negative incoincident index amount by giving an essentially large weight to the positive incoincident index amount as compared with the negative incoincident index amount, to calculate the incoincident index amount.

In accordance with this embodiment, the second statistical processing means calculates the positive incoincident index amount as to such a feature word to which the index value designated by the user when the feature word list is set, for instance, as to such a feature word to which "1" (there is. a certain feature) is set as an index value. The second statistical processing means calculates a positive incoincident index amount "S3" in such a manner that, for example, a total number of "1" is calculated, and this total number is multiplied by a predetermined coefficient "-a" (this coefficient "a" being real number larger than "0").

On the other hand, as to the feature word to which the index value is not designated by the user when the feature word list is set, it is so regarded that a passive feature is potentially present, the second statistical processing unit calculates a negative incoincident index amount. For example, as to such a feature word having an index value of "0" (namely, there is no feature), a negative incoincident index value is calculated. For example, a negative incoincident index amount "S4" is calculated as to such a feature word which is predicted as a feature word having a strong feature, because appearance numbers of "0" are extremely large among arrays of "1" and "0" of the index values in the feature words related to a plurality of contents information which are judged to be coincident with one retrieve keyword, it becomes a predetermined coefficient "b" (noted that this coefficient "b" is real number larger than "0"), and furthermore, as to such a feature word which is predicted as a feature word having substantially no feature, because appearance numbers of the index value "0" are not largely different from appearance numbers of the index value "1", it becomes a value "0."

A positive incoincident index amount "S3" with respect to each pair between the retrieve keyword and the feature word, which is calculated in the above-described manner, may constitute such an index indicative of a height of a negative correlation having this feature word (for instance "dark") with respect to this retrieve keyword (for example, "cheerful contents information") in view of a sensitivity of a user. On the other hand, a negative coincident index amount "S4" with respect to each pair between the retrieve keyword and the feature word, which is calculated in the above-described manner, may constitute such an index indicative of a height of a negative correlation having this feature word (for instance "dark" ) with respect to this retrieve keyword which is owned by a counter sensitivity (for example, sensitivities specific to respective users, which are substantially resembled to "dark") with respect to this retrieve keyword (for example, "cheerful contents information") in view of a sensitivity of a user. However, since the negative incoincident index amount "S4" owns such a meaning of a negative correlation of an incoincident index, this index amount "S4" passively and eventually represents a positive correlation with respect to this retrieve word.

Then, an incoincident index amount which is coincident with, for example, S3 + S4 is calculated in such a manner that the former value is processed by applying thereto a larger weight factor than a weight factor of the latter value, and then, both the weight-processed former value and latter value are added to each other. In other words, as to such a feature word which is actively judged as a feature word having a certain feature by a user, an evaluation as a structural factor is increased so as to calculate a final coincident index amount (for example, S3 + S4), as compared with another feature word which is actively judged as a feature word having no feature.

In this embodiment, the second statistical processing means calculates the negative incoincident index amount based upon an index value of a feature word in which a fluctuation in mean deviation is smaller than a predetermined threshold value.

When the information selecting apparatus is arranged in the above-described manner, the negative incoincident index amount "S4" may be obtained in a relatively easy manner that as to such a feature word which is predicted as a feature word having a strong feature, because appearance numbers of "0" are extremely large among arrays of "1" and "0" of the index values in the feature words related to a plurality of contents information which are judged to be coincident with one retrieve keyword, it becomes a predetermined coefficient "b", and furthermore, as to such a feature word which is predicted as a feature word having substantially no feature, because appearance numbers of the index value "0" are not largely different from appearance numbers of the index value "1", it becomes a value "0."

In an information selecting apparatus, according to another aspect of the present invention, the calculation means calculates a correlative value between each of the plurality of feature words and another retrieve keyword having a predetermined relationship with the one retrieve keyword based on the coincident index amount and the incoincident index amount. The update means updates a portion related to the another retrieve keyword within the sensitivity table.

In accordance with this embodiment, based upon both the coincident index amounts and the incoincident index amounts, which are calculated by both the first and second statistical processing means, the calculating means calculates not only the entered one retrieve keyword, but also the new correlative values between another retrieve keyword having a predetermined relationship with this one retrieve keyword, and each of the plural feature words, respectively. Then, the update means updates a portion related to the another retrieve keyword within the sensitivity table, but also a portion related to this one retrieve keyword within the sensitivity table by employing the new correlative value calculated in this manner.

As a result, when one retrieve keyword is entered, the updating operation as to the sensitivity table portion related to another keyword may be carried out. In other words, while either the sensitivity-to-sensitivity learning or the emotion-to-emotion learning related to the respective users is carried out the sensitivity table may be changed so as to be fitted to the sensitivities of the individual users.

In the information selecting apparatus of this embodiment, the calculation means may calculate the correlative values between the another retrieve keyword and each of plurality of feature words based on a previously-preset retrieve keyword-to-keyword correlative degree indicating degree of the predetermined relationship among the plural retrieve keywords.

In accordance with this arrangement, since the retrieve keyword-to-keyword correlation degree is previously set which indicates a predetermined relation degree among a plurality of retrieve keywords, the correlative value as to another retrieve keyword having a predetermined relationship with respect to this one retrieve keyword can be calculated in a relatively easy manner based upon this retrieve keyword-to-keyword correlative degree, and thus, the sensitivity table related to another retrieve keyword can be updated. For instance, when a retrieve keyword-to-keyword correlative degree between two retrieve keywords, namely "cheerful contents information" and "energetic contents information" is calculated as 0.5 based upon coincident degrees of contents which are arranged in the order of scores, the correlative value obtained when one retrieve keyword "cheerful contents information" is inputted is multiplied by 0.5, and then, the correlative value corresponding thereto in the sensitivity table port related to another retrieve keyword "energetic contents information" may be updated by employing the above-described multiplied value.

An information selecting apparatus according to another aspect of the present invention, further includes retrieve means for retrieving a retrieve keyword related to a free keyword among the plurality of retrieve keywords. The input means is constituted by that the free keyword can be entered instead of or in addition to the retrieve keyword. When the free keyword is entered by the input means, the selection means, the judgement means, the first statistical processing means, the second statistical processing means, the calculation means, and the update means handle the retrieve keyword retrieved by the retrieve means as the one retrieve keyword.

In accordance with this embodiment, when a free keyword is entered by operating the input means, the retrieve means retrieves such a retrieve keyword related to this inputted free keyword from the plural retrieve keyword. Thereafter, the selection means, the judgement means, the first statistical processing means, the second statistical processing means, the calculation means, and the update means handle the retrieve keyword retrieved by the retrieve means as one retrieve key. As a consequence, since the user may request desirable contents information by employing not only the previously-set retrieve keyword, but also the more freely free keyword, user-friendly information selecting apparatus may be accomplished.

The above-described retrieving operation by the retrieve means may be realized as follows. That is, this retrieving operation may be carried out with reference to a correspondence table between free keywords and retrieve keywords.

Alternatively, while referring to a knowledge database which has previously stored thereinto such an information capable of establishing a relationship between free keywords and retrieve keywords, such a retrieve keyword corresponding the free keyword may be predicted by way of a prediction engine. Furthermore, for example, when this information selecting apparatus is an on-vehicle type information selecting apparatus, such a free keyword may be extracted from a conversation made by a user such as conversations made in a cabin.

The input means of the information selecting apparatus is furthermore comprised of detecting means for detecting an atmosphere of the user via an externally-provided sensor such as a microphone and a camera instead of inputting of the above-explained retrieve keyword, or in addition to inputting of the retrieve keyword; and also, retrieve means for retrieving such a retrieve keyword related to this atmosphere detected by said detecting means among the plural retrieve keywords. The selection means, the judgement means, the first statistical processing means, the second statistical processing means, the calculation means, and the update means may handle the retrieve keyword retrieved by the retrieve means as one retrieve key when the atmosphere is detected by the detecting means.

In the case that the information selecting apparatus is arranged in this manner, when the detecting means detects an atmosphere of a user based upon, for instance, a silence, laughing voice, quarrel voice, a conversation content, and a word extracted from a conversation, the retrieve means retrieves such a retrieve keyword related to this detected atmosphere from the plurality of retrieve keywords. For example, when the detecting means detects a "bad" mood in accordance with a predetermined reference, the retrieve means retrieves such a retrieve keyword "calming music piece." When the detecting means detects a "silent" atmosphere, the retrieve means retrieves such a retrieve keyword "telling music piece." Thereafter, the selection means, the judgement means, the first statistical processing means, the second statistical processing means, the calculation means, and the update means handle the retrieve keyword retrieved by the retrieve means as one retrieve key. It should be noted that the above-described retrieving operation by the retrieve means may be realized as follows. That is, this retrieving operation may be carried out with reference to a correspondence table between plural sorts of preset atmospheres and retrieve keywords. Alternatively, while referring to a knowledge database which has previously stored thereinto such an information capable of establishing a relationship between atmospheres and retrieve keywords, such a retrieve keyword corresponding the atmosphere may be predicted by way of a prediction engine.

To solve the above-described problems, an information selecting method according to an aspect of the present invention, used in an information selecting apparatus having a feature word list containing a plurality of index values of a plurality of feature words previously set and indicative of various sorts of featured contents of a plurality of contents information including at least one of voice information, picture information, and text information and user-dependable sensitivity tables, which can be updated and include a plurality of correlative values between the plurality of feature words and a plurality of retrieve keywords used to retrieve the plurality of contents information, the information selecting method includes the steps of inputting one desirable retrieve keyword among the plurality of retrieve keywords, selecting at least one of the plurality of contents information, the at least one contents information being coincident with the one

retrieve keyword, on the basis of the sensitive table and the feature word list when the one retrieve keyword is inputted in the inputting step, judging as to whether or not each of the selected contents information is coincident with the one. retrieve keyword on the basis of an individual judgment by a user, quantifying relevancy between the one retrieve keyword and each of the plurality of characteristic keywords, with respect to the contents information judged to be coincident with the one retrieve keyword by the judgement means, in a statistical manner based on the index values with respect to the feature words stored in the corresponding feature word list to obtain a coincident index amount, quantifying relevancy between the one retrieve keyword and each of the plurality of characteristic keywords, with respect to the contents information judged not to be coincident with the one retrieve keyword by the judgement means, in a statistical manner based on the index values with respect to the feature words stored in the corresponding feature word list to obtain a incoincident index amount, calculating a new correlative values between the one retrieve keyword and the plurality of feature words, respectively, based on the coincident index amount and the incoincident index amount, and updating a portion of the sensitivity table, which is related to the one retrieve keyword, by using the new correlative value calculated.

In accordance with the information selecting method of the present invention, similar to the above-explained case of the information selecting apparatus according to the present invention, since the user-dependable sensitivity table portion corresponding to an input of one retrieve keyword is repeatedly updated, this user-dependable sensitivity table may be updated which is fitted to the sensitivity of the individual user. As a consequence, while such a sensitivity table which is sequentially updated is employed, the information corresponding to the sensitivity of the individual user can be automatically selected by the selection means within relatively short time in an easy and firm manner.

In an information selecting method according to another aspect of the present invention, in the selecting step, the plurality of contents information is placed in the order of coincident degree with the one retrieve keyword on the basis of the sensitivity table and the feature word list. In the selecting step, at least one contents information is selected, the coincident degree orders of which are upper-grade orders.

In accordance with this embodiment, the selection step selects only the contents information whose order is upper-grade, and the judging step judges as to whether or not the selected contents information is coincident with one retrieve keyword. As a result, the user-dependable sensitivity table can be updated in a higher efficiency.

In this embodiment, in the selecting step, coincident degree of another retrieve keyword with the plurality of contents information may be taken into consideration, the another retrieve keyword having a predetermined relation with the one retrieve keyword, when the selection means places the plurality of contents information in the order of the coincident degree with the one retrieve keyword.

In accordance with this embodiment, if the selection step applies the orders corresponding to another retrieve keyword, then the selection step can applies the orders to the contents information in the case that one retrieve keyword is thereafter inputted which owns a predetermined relationship with respect to the other keyword by taking in account this ordering operation. In other words, while either the sensitivity-to-sensitivity learning or the emotion-to-emotion learning related to the individual user is carried out, the sensitivity table can be updated which is fitted to the sensitivity of the individual user.

To solve the above-described problems, according to an aspect of the present invention, there is provided an information selecting/reproducing apparatus including the above-described information selecting apparatus (including various modes thereof), storage means for storing thereinto the plurality of contents information, and reproducing means for reproducing the at least one of the plurality of contents information selected by the selection means.

In accordance with the information selecting/reproducing apparatus of the present invention, when a desirable one retrieve keyword is entered, either one or plurality of contents information is selected by the selection means employed in the above-explained information selecting apparatus of the.present invention, and then, the selected contents information is reproduced by the reproduction means.

As a consequence, when one retrieve keyword is inputted, such a contents information which is fitted to a sensitivity of an individual user and is automatically selected can be reproduced.

It should be understood that the storage means may alternatively compress contents information to store thereinto this compressed contents information. In this alternative case, the information selecting/reproducing apparatus is further comprised of a compression/expansion means capable of compressing/expanding contents information, and the reproduction means reproduces such contents information which is expanded by the compressing/expanding means. In particular, such an information selecting/reproducing apparatus is suitably and practically used as an on-vehicle type information selecting/reproducing apparatus equipped with a storage apparatus whose scale is limited.

An information selecting/reproducing apparatus according to another aspect of the present invention, further includes list representing means for representing an information list in which titles of the at least one of the plurality of contents information selected by the selection means are arranged and skip means capable of externally designating as to whether or not a reproducing operation of the contents information corresponding to each of titles under representing condition by the list representing means is skipped. The judgement means judges as to whether or not the contents information is coincident with the one retrieve keyword in response to such a fact as to whether or not the reproducing operation of the corresponding contents information is skipped.

In accordance with this embodiment, the judgement means is capable of judging as to whether or not each of the titles contained in the information list represented by the list representing means is skipped in response to an external operation by the user, while the individual judgement of the user is used as a reference.

An information selecting/reproducing apparatus according to another aspect of the present invention, further includes skip means capable of externally designating as to whether or not a reproducing operation of the contents information under reproducing condition by the reproducing means is skipped. The judgment means judges as to whether or not the contents information is coincident with the one retrieve keyword in response to such a fact as to whether or not the reproducing operation of the contents information is skipped.

In accordance with this embodiment, the judgement means is capable of judging as to whether or not each of the contents information under reproduction is skipped in response to an external operation by the user, while the individual judgement of the user is used as a reference.

To solve the above-described problems, a first computer program according to an aspect of the present invention can cause a computer to function as the above-described information selecting apparatus (note that various modes thereof are included). Concretely speaking, this first computer program causes the computer to function as the input means, the selection means, the judgement means, the first statistical processing means, the second statistical processing means, the update means, and the like, which constitute the above-described information selecting apparatus of the present invention.

In accordance with the first computer program of the present invention, this first computer program has been read out from a storage medium such as a CD (Compact Disk), a DVD (Digital Versatile Disk), and a hard disk, which has stored thereinto this first computer program, and thereafter the read first computer program is executed by this computer. Otherwise, this first computer program is downloaded via a communication means to a computer, and thereafter, this downloaded first computer program is executed by this computer, so that the above-explained information selecting apparatus of the present invention can be realized in a relatively simple manner.

To solve the above-described problems, a second computer program according to another aspect of the present invention can cause a computer to function as the above-described information selecting/reproducing apparatus (note that various modes thereof are included). Concretely speaking, this second computer program causes the computer to function as the input means, the selection means, the judgement means, the first statistical processing means, the second statistical processing means, the calculation means, the update means, and the reproducing means, which constitute the above-described information selecting/reproducing apparatus of the present invention.

In accordance with the second computer program of the present invention, this second computer program has been read out from a storage medium such as a CD (Compact Disk), a DVD (Digital Versatile Disk), and a hard disk, which has stored thereinto this second computer program, and thereafter the read second computer program is executed by this computer. Otherwise, this second computer program is downloaded via a communication means to a computer, and thereafter, this downloaded second computer program is executed by this computer, so that the above-explained information selecting/reproducing apparatus of the present invention can be realized in a relatively simple manner.

The above-described effects and other advantages of the present invention may become apparent from the following descriptions as to embodiments.

In the accompanying drawings:

Fig. 1 is a block diagram for indicating an arrangement of an on-vehicle electronic apparatus according to an embodiment of the present invention.
Fig. 2 (a) is a conceptional diagram for representing one concrete example of a sensitivity table indicative of correlative values among respective retrieve keywords and respective feature words; and Fig. 2(b) is another conceptional view for indicating one concrete example of a feature word list indicative of setting conditions of feature words with respect to the respective music pieces.
Fig. 3 is a flow chart for describing an entire flow operation of a music selecting process operation containing learning algorithm.
Fig. 4 is a flow chart for explaining a process operation executed based upon the learning algorithm within the process operation of Fig. 3.
Fig. 5 is a conceptional diagram for explaining a step for calculating a new correlative value for updating the sensitivity table in this learning algorithm within the process operation indicated in Fig. 4.
Fig. 6 is a conceptional diagram for explaining emotion-to-emotion learning algorithm in an embodiment.
Fig. 7 is a diagram for showing a list table of spot names proposed in a modification.

Next, a detailed description will now be made of various embodiments of the present invention related to an information selecting apparatus, an information selecting method, and an information selecting/reproducing apparatus, for selecting information in correspondence with each of personal sensitivities based upon learning algorithm, and further, related to a computer program used to select information.

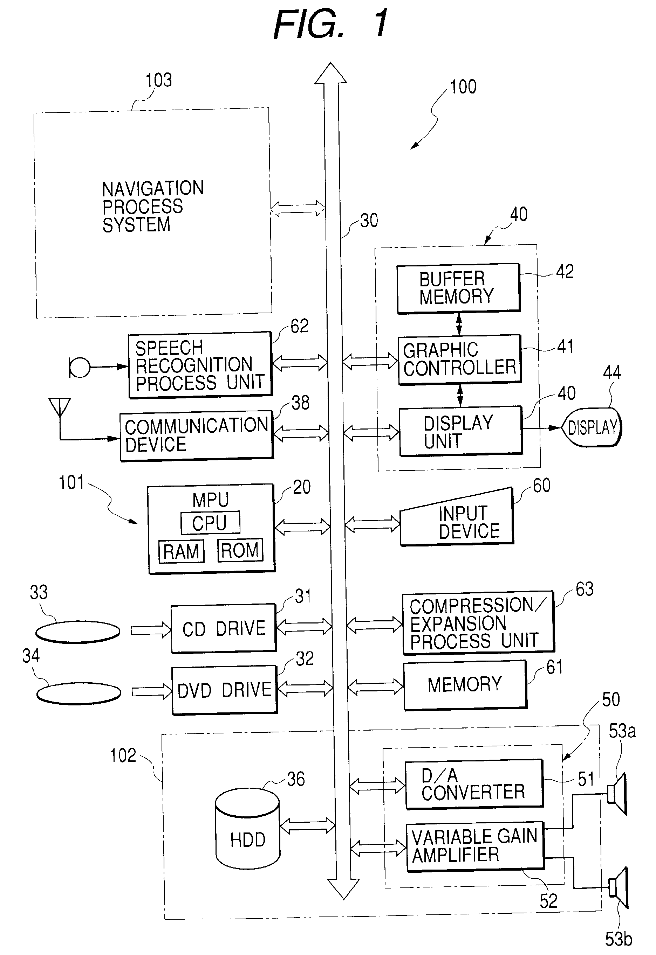

Fig. 1 is a block diagram for schematically showing an arrangement of an on-vehicle electronic apparatus 100 according to an embodiment of the present invention.

In Fig. 1, the embodiment is constituted as an on-vehicle electronic apparatus containing an apparatus to which learning algorithm is applied in such a manner that an on-vehicle type audio unit and an on-vehicle type navigation unit are integrally assembled so that music data and maps for navigation are acquired via a communication network. In the on-vehicle electronic apparatus 100 according to the embodiment, it is so assumed that large pieces of music (for example, data-compressed music: MPEG-1 Audio Layer-3, namely popular name of MP3) have been previously stored in a hard disk unit (HDD) by executing a process operation by a user. Alternatively, it is so assumed that very large pieces of compressed music data have been previously stored into the hard disk unit by performing downloading operation from a music Web site provided on a communication network (in particular, the Internet network) by executing a process operation by a user.

In Fig. 1, this on-vehicle electronic apparatus 100 includes a commonly-used process system 101, an audio process system 102, and a navigation process system 103.

The commonly-used process system 101 includes a microcomputer 20, a CD drive 31, a DVD drive 32, a wireless communication device 38, a display unit 40, an input device 60, a memory 61, a speech recognition process unit 62, and a compression/expansion process unit 63.

The audio process system 102 includes a hard disk unit (HDD) 36 and an audio output unit 50.

The navigation process system 103 includes a self-positioning device and a GPS receiver. It should be noted that since the navigation process system 103 is not directly related to the present invention, explanations as to structures/operations thereof will be omitted in the below-mentioned description. Also, in this sort of on-vehicle electronic apparatus 100, an input/output (I/O) circuit and an external interface (I/F) are provided, but are not illustrated in this drawing.

Next detailed constructions and detailed operations (process operations) of the respective constructive units shown in Fig. 1 will now be explained.

A microcomputer 20 corresponds to a system controller, which controls an entire unit of the on-vehicle electronic apparatus 100, and executes "music retrieve learning algorithm" according to this embodiment. Also, the microcomputer 20 includes a CPU, a ROM being a non-volatile solid-state storage element, and a working RAM. The microcomputer 20 sends/receives data to/from the respective structural units connected to a bus line 30. A process control operation by sending/receiving the data is performed by executing a boot program and a control program, which have been stored in the ROM. The RAM especially executes a working process operation for temporarily storing thereinto data processed by the CPU by manipulating the input device 60 by a user.

The CD (Compact Disk) drive 31 reads out music data, video (picture) data, text data, map data, and the like from a CD 33. The DVD (Digital Versatile Disk) drive 32 reads out music data, video (picture) data, text data, map data, and the like from a DVD 34. It should also be noted that only one of the CD drive 31 and the DVD drive 32 maybe disposed, or a single set of CD/DVD commonly-used drive may be provided. It should also be understood that if music data and the like may be acquired via the wireless communication device 38 by way of a communication, then such a large storage capacity device as the CD drive 31 and the DVD drive 32 may not be provided.

As previously described, the hard disk unit (HDD) 36 has stored thereinto large pieces of music (namely, compressed music data). In other words, the hard disk unit 36 has stored thereinto large pieces of compressed music data, for example, which have been downloaded by the user via the wireless communication device 38. Alternatively, the hard disk unit 36 has stored thereinto large numbers of music data, which have been read out from either the CD 33 or the DVD 34 by the CD drive 31 or the DVD drive 32 is operated.

The hard disk unit 36 has stored thereinto music data, video data, text data, map data, and the like, which have been read by operating the CD drive 31 or the DVD drive 32 by performing the process operation by the user. After these data have been stored in the hard disk unit 36, these data may be read out therefrom at an arbitrary time instant. As a result, for example, while the map data stored in the CD 33 or the DVD 34 is read so as to perform the navigation operation, speech (voice) data or picture data, which have been stored in the hard disk unit 36, is read so that speech output or picture output may be derived. Alternatively, while the speech (voice) data or the picture (video) data stored in the CD 33 or the DVD 34 is read out to perform the speech output or the picture output, the map data stored in the hard disk unit 36 is read so that the navigation operation may be carried out. Furthermore, the speech data, the picture data, or the map data, which have previously been downloaded via the wireless communication device 38 by executing the process operation by the user, have been stored in the hard disk unit 36. Thereafter, any of these speech data, picture data, and map data is read out from the hard disk unit 36 at an arbitrary time instant, so that the read data may be outputted.

The wireless communication device 38 is employed so as to acquire (receive) music data provided on a communication network into the hard disk unit 36, and therefore, has a structure similar to a general-purpose portable telephone. For instance, the structure of the wireless communication device 38 may be known as a PDC (Personal Digital Cellular Telecommunication System) system, a PHS (Personal Handyphone System) type TDMA, a TDD, and a CDMA structure (a high-frequency radio transmission/reception unit; a coding/decoding unit; a time dividing/multiplexing unit; a control unit; a speech input/output unit).

The display unit 40 displays various sorts of processed data on the display screen thereof under control of the microcomputer 20. A graphic controller 41 provided inside the display unit 40 controls various units of a display control unit 43 based upon control data transferred from CPU 22 via the bus line 30. Also, a buffer memory 42 constituted by employing a V-RAM (video RAM) and the like temporarily stores thereinto displayable image information. Furthermore, the display control unit 43 executes a display control operation. Also, a display 44 which is constituted by employing any one of a liquid crystal display (LCD), an EL (Electro-Luminescence) display, and a Braun (CRT) tube, may display image data outputted from the graphic controller 41 on the display screen thereon. This display 44 is arranged, for example, in the vicinity of a front panel within an automobile.

Within the speech output unit 50, a D/A converter 51 controls a digital speech signal into an analog speech signal under control of the microcomputer 20, and a variable gain amplifier (AMP) 52 amplifies the analog speech signal in the variable gain manner by receiving a user input operation to output the amplified speech signal to speakers 53a and 53b.

The input device 60 is constituted by keys, button switches, and a remote controller, which are used to enter various commands and various sorts of data.

The speech recognition processing unit 62 is constructed of a digital signal processor (DSP), and transfers various sorts of commands and various kinds of data to the microcomputer 20, while these commands and data are produced by recognizing speech signals (voice signals) of speech input operations (for example, music reproduction instructing input) form a microphone "M." In this example, a music reproducing operation may be turned ON/OFF, a music piece may be inputted/instructed, a music reproducing operation may be skip-instructed while music is reproduced after a music list is selected, or a music piece is selected. All of the above-explained operations may be carried out by executing a speech recognition (for instance, linear prediction method spectrum analysis).

The compression/expansion processing unit 63 is constituted by a digital signal processor (DSP) and the like. When music data is stored into the hard disk unit 36, the compression/expansion processing unit 63 compresses this music data, and also expands this compressed music data during a reproducing operation by way of a demodulating operation, for example, the above-described MPEG-1 method.

It should be noted that both the speech recognition processing unit 62 and the compression/expansion processing unit 63 are not constituted by separately employing the digital signal processors (DSPs) shown in Fig. 1, but may be alternatively constructed as follows: That is, while exclusively-designed utility software is installed in these speech recognition processing unit 62 and expression/expansion processing unit 63, this software (program) may be executed by the microcomputer 20 so as to execute similar process operations.

As previously described, this embodiment is arranged by the on-vehicle electronic apparatus 100 containing the apparatus to which the music retrieve learning algorithm is applied. However, even when such an apparatus is employed which mounts thereon either a microprocessor (MPU) or a digital signal processor (DSP) capable of reproducing music and further capable of executing this music retrieve learning algorithm, the below-explained music retrieve learning algorithm may function in a similar manner. Alternatively, even when such a small-scaled/general-purpose computer is employed on which utility software has been installed, the above-described music retrieve learning algorithm may function in a similar manner. This installed utility software acquires data-compressed music from a communication network into a hard disk drive (HDD) and then reproduces the acquired music.

Next, various sorts of process operations realized by the music retrieve learning algorithm according to the embodiment will now be explained.

(I)Process operation by internal emotion learning algorithm:

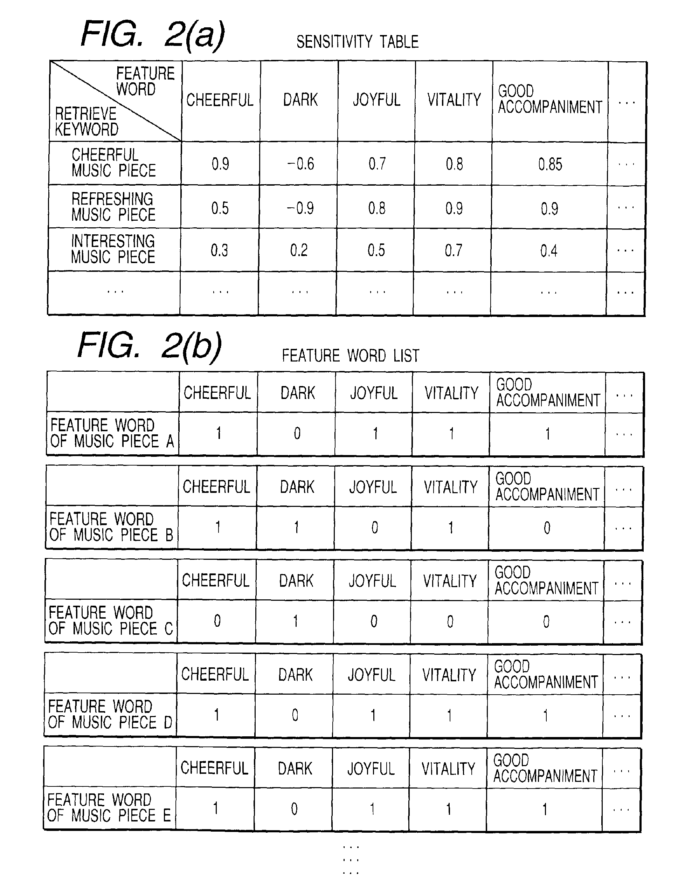

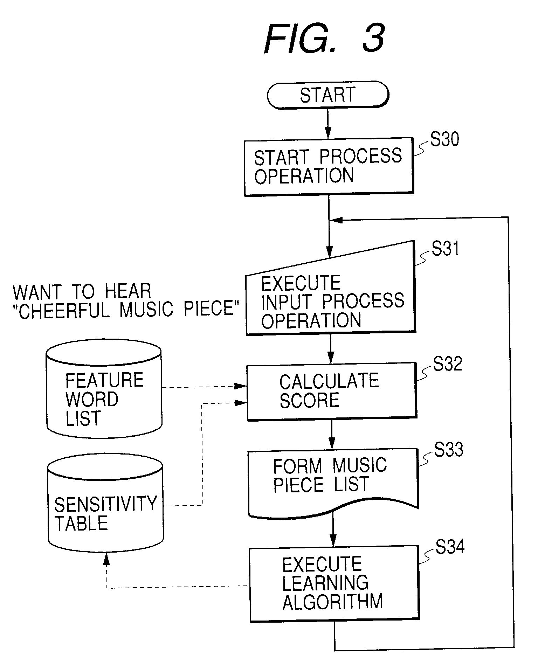

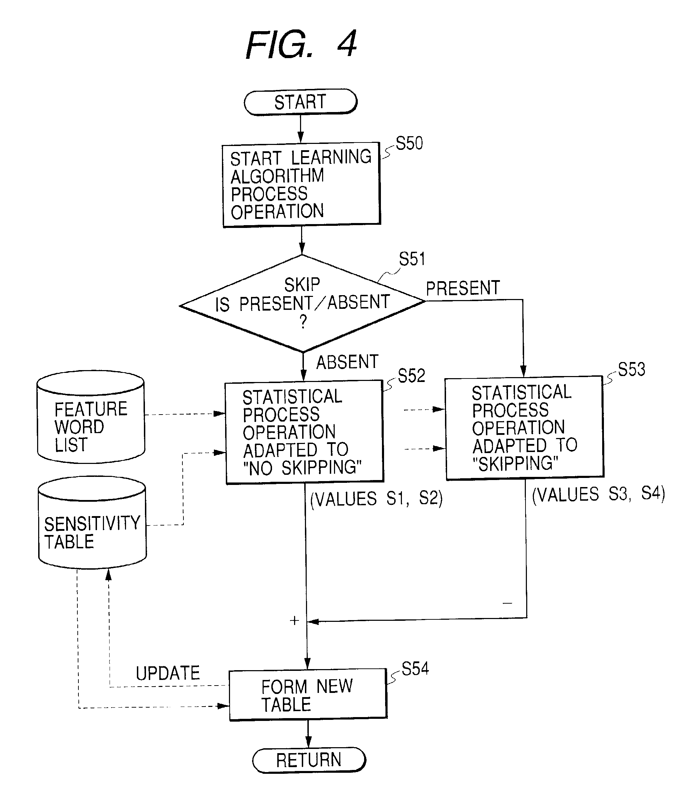

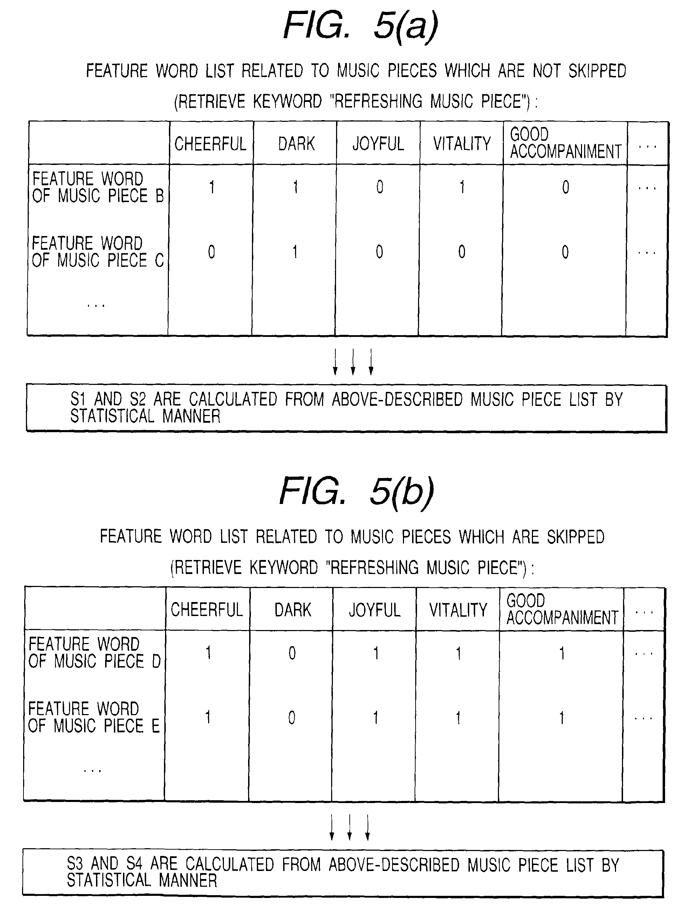

At first, among process operations executed by the music retrieve learning algorithm, "internal emotion learning algorithm" will be described with reference to Fig. 1 to Fig. 5. Fig. 2(a) is a conceptional diagram for showing one concrete example of a sensitivity table, which indicates correlative values between each of retrieve keywords and each of feature words. Fig. 2(b) is another conceptional diagram showing one concrete example of a feature word list, which indicates setting state of feature words with respect to each of music pieces.. Fig. 3 is a flow chart showing an overall process flow operation as to a music selecting process operation including learning algorithm. Fig. 4 is a flow chart showing a process operation executed in accordance with the learning algorithm. Fig. 5 is a conceptional diagram explaining steps for calculating new correlative values used to update the sensitivity table in the learning algorithm.

In this case, "internal emotion learning algorithm" implies such a process operation that when a feeling of a music piece, which is wanted to be heard or "emotion" is specified, a result of learning algorithm is not reflected to other feeling or other "emotion." Concretely speaking, the "internal emotion learning algorithm" is a learning algorithm related to one retrieve keyword and implies a learning algorithm in which only a portion related to the above-described one retrieve keyword is updated and other portions related to other keywords are not updated in the sensitivity table as indicated in Fig. 2(a). Otherwise, the "internal emotion learning algorithm" implies a learning algorithm in which a score used to give an order of selecting music pieces with respect to one retrieve keyword is defined irrespective of other score: used to give orders of selecting music pieces with respect to other keywords, and orders of selecting music pieces with respect to the respective retrieve keywords are independently made from each other.

First of all, at a stage when shipping, a generic sensitivity table as shown in Fig. 2(a) has been set in the memory 61 indicated in Fig. 1. The generic sensitivity table indicates the correlative values between each of retrieve keywords and each of feature words and is in a default state and also is picked up from a questionnaire. Then, the learning algorithm, according to this embodiment, is used to update contents of the sensitivity table in such a manner that the updated table contents are matched with a personal sensitivity of each of users by employing a statistical method, which will be explained later.

As indicated in Fig. 2(a), first of all, as an initial condition, for example, approximately 50 sorts of retrieve keywords to approximately 100 sorts of retrieve keywords are previously set so that individual user can retrieve music pieces in view of feelings of desirable music pieces. In this example, as to feelings of music pieces, retrieve keywords of "cheerful music piece", "energetic music pieces", "touched music pieces", and the like have been previously set.

In connection to these retrieve keywords, for example, about 10 sorts of feature words such as "cheerful", "dark", "joyful", "vitality", and "good accompaniment" have been previously set. It should be understood that such sorts of feature words are fixed.

Then, as exemplified in Fig. 2(a), as correlative values contained in a provisional sensitivity table, for example, "cheerful/0.9, dark/-0.6, joyful/0.7, vitality/0.8, good accompaniment/0.85, ---" are set with respect to "cheerful music piece" in the retrieve keywords.

The above-described initial setting operations may be carried out, for instance, while manufacturing or shipping the on-vehicle electronic apparatus 100. Alternatively, individual user may perform the initial setting operations in advance (namely, before music piece is actually selected and reproduced).

Next, as shown in Fig. 2(b), an individual user performs a featuring operation using a feature word with respect to a music piece "A". In other words, as to music pieces, which individual user will later wish to hear (reproduce) using retrieve keywords among a large number of music pieces stored in the hard disk unit 36, when or before a large number of music pieces are compressed and .the compressed music pieces are stored in the hard disk unit 36 (see Fig. 1), individual user inputs and sets index values of feature words every music pieces.

The input/setting operation of the feature words is carried out with the input device 60 and the speech recognition processing apparatus 62 by setting either "1 (feature)" or "0 (no feature)." Concretely speaking, when an individual user may feel "cheerful" as to one music piece, this user positively set "1" with respect to the feature word "cheerful", whereas when an individual user may feel "joyful" as to the same music piece, this user positively sets "1" with respective to the feature word "joyful." On the other hand, when an individual user may not especially feel "dark" as to the same music piece, setting of "0" with respect to the feature word "dark" is kept remained, whereas when this user may not especially feel "vitality" as to the same music piece, setting of "0" with respect to the feature word "vitality" is kept remained.

As exemplified in Fig. 2(b), as described above, the featuring operations as to each of music pieces are carried out with respect to a plurality of music pieces by inputting/setting either the index value "1" or "0" with respect to the feature word. Thus, a feature word list is previously prepared.

Next, a description will be made of an overall flow operation as to a music selecting process operation containing the learning algorithm with reference to a flow chart shown in Fig. 3.

In accordance with a problem solving method of the embodiment, namely, in accordance with the learning algorithm, music pieces can be selected in correspondence with individual sensitivities and music pieces fitted to present feelings (moods) of users can be easily and firmly selected in response to feeling manners specific to these users. Concretely speaking, as will be subsequently explained, with respect to a selecting operation and a reproducing operation of a music piece using a retrieve keyword, this learning algorithm may change the table as shown in Fig. 2 (a) in response to a fact as to whether or not a user skips hearing (reproducing) of a music piece so that the table is fitted to deviation of a personal sensitivity with respect to music.

First, in the flow chart of Fig. 3, while a user drives or stops the own automobile, the user inputs a command through operating the input device 60 or the speech recognition processing apparatus 62. The command instructs to start the music selection processing operation by utilizing this learning algorithm. As a result, the normal music reproduction mode is ended and the music selection processing operation is started (step S30).

Next, the user inputs a feeling, such as "cheerful music piece" or "energetic music piece", of a music piece, which the user wishes to hear, through the input device 60 or the speech recognition processing unit 62 as a specific retrieve keyword (step S31).

As a result, the correlative values of each of feature words corresponding to this inputted retrieve keyword are obtained by referring to the sensitivity table shown in Fig. 2(a). Furthermore, scores with respect to the relevant retrieve keyword are calculated as to each of the music pieces from an array of either the index value "1" or the index value "0" in the feature word list indicated in Fig. 2 (b) (step S32).

For instance, in the example of Fig. 2, when the retrieve keyword is "cheerful music piece", a score of a music piece "A" maybe calculated as follows: $(1 \times 0.9)+(0 \times -0.6)+(1 \times 0.7)+(1 \times 0.8) + (1 \times 0.85) + ... = 3.25$. As to each of music pieces, scores may be calculated as " summation of (index value $\times$ correlative values)."

As to such a large number of music pieces, which have been previously featured by the individual user in the above-described manner, the scores are calculated respectively. Then, the music pieces with respect to this retrieve keyword are placed in the order of calculated higher score, and thus, a music piece list with respect to this retrieve keyword is formed (step S33).

Thereafter, while the user drives or stops the own vehicle, the music piece list formed in this manner is displayed on the display unit 40 and/or the audio output unit 50 reproduces an actual music piece. More specifically, in this embodiment, while the music piece list is displayed or the music piece is reproduced, the learning algorithm is executed in response to such a fact as to whether or not the music piece is deleted from the music piece list, or whether the individual user skips each of the music pieces or does not skip each of the music pieces (namely, whether or not user listens to music pieces until last music piece without skipping relevant music piece) (step S34).

As will be explained more in detail, in particular, in this learning algorithm, a feature, which is made contrary to the retrieve keyword, may be extracted from the feature words of the music piece list where the user has skipped. Conversely, an extremely strong correlative feature may be extracted from the music piece list where the user has not skipped. The content of the sensitivity table is updated based upon a statistical method for these features in such a manner that large/small (strong/weak) values are applied to the respective correlative values of the sensitivity table, so that the learning capable of reflecting the personal sensitivity may be carried out.

It should be noted that the learning capable of reflecting the personal sensitivity is carried out with respect to only the retrieve keyword inputted in the step S31 when the process operation is executed based upon the internal emotion learning algorithm. When emotion-to-emotion learning algorithm, which will be described later, is executed, the result of the learning algorithm executed with respect to the retrieve keyword inputted in the step S31 is reflected onto a sensitivity table with respect to other retrieve keywords by previously setting a retrieve keyword-to-keyword correlative degree indicating a correlative degree among retrieve keywords.

Thereafter, when the reproducing operations of a plurality of music pieces in accordance with the music piece list formed in the step S33 are completed or stopped, the process operation is returned to the previous step S31. In the step S31, the subsequent process operation is repeatedly carried out by employing the sensitivity table as indicated in Fig. 2(a), the content of which has been updated based upon the learning algorithm in the step S34.

Referring now to a flow chart of Fig. 4 and a table of Fig. 5, the process operation based upon the learning algorithm defined in this step S34 will be described.

As indicated in Fig. 5(a) and Fig. 5(b), in the process operation, the below-mentioned case is assumed. That is, with respect to a music piece displayed on the display 44 of the display unit 40 when a music piece is selected or with respect to a music piece actually reproduced, a user executes an input operation as to whether or not this music piece is skipped. Concretely speaking, as indicated in Fig. 5(a) and Fig. 5(b), it is so assumed that the retrieve keyword is "energetic music piece." Further, as represented in Fig. 5(a), when a music piece is selected or reproduced in correspondence with the retrieve keyword "energetic music piece", it is assumed that a music piece "B" and another music piece "C" are not skipped by the user. On the other hand, as represented in Fig. 5(b), when a music piece is selected or reproduced in correspondence with the retrieve keyword "energetic music piece", it is assumed that a music piece "D" and another music piece "E" have been skipped by the user.

In Fig. 4, first of all, while a music piece wanted to be heard by the individual user is selected or reproduced in the previous step S34 of Fig. 3, the learning algorithm is initiated (step S50). A judgement is made as to whether or not each of the music pieces has been skipped by this individual user (step S51).

When it is judged in the step S51 that the music piece has not been skipped (namely, no skip in step S51), for example, a value "S1" and a value "S2" are calculated with respect to , each of feature words from the music piece list of Fig. 5(a) (namely, a list of music pieces which are not skipped), based upon a statistical process operation. The value "S1" corresponds to one example of a positive coincident index value shown in the below-mentioned formula (1) and the value "S2" corresponds to one example of a negative coincident index value indicated in the below-mentioned formula (2):

$$S1 = \Sigma \times a \tag{1}$$

S2 = (with respect to factors whose mean deviation is

smaller than or equal to d) + (-b)                    (2)

In the above-described formula (1), symbol "Σ" shows a summation of appearing quantities of the value "1" in the respective feature words, and a constant "a" corresponds to a weighting constant (for example, 1.1).

In the above-described formula (2), a constant "b" corresponds to another weighting constant (for instance, 1.01).

In other words, when featuring operations are carried out by using each of feature words, as to the feature word to which the index value "1" is set since the individual user positively recognizes this feature, the value "S1" is calculated by relatively increasing the weight factor as the positive factor. In other words, this value "S1" indicates an entire feature and indicates a summary of weight factors of feature words in contrast to one retrieve keyword. This positive factor may constitute a positive element of an individual sensitivity.

On the other hand, when featuring operations are carried out by using the respective feature words, as to the feature word whose index value "0" is maintained since the individual user recognizes no specific feature, the weight factor is relatively decreased as a negative factor. Then, in particular, as to the negative factor, while a constant threshold level "d" is set, only negative factors in which a fluctuation in mean deviation is small is evaluated, and then, the evaluated negative factor is set as the value S2. Conversely, when the mean deviation exceeds the threshold level "d" and there are large fluctuations, the feature word is negligible as a factor having a low relative relationship. In other words, "only certain factors" which should be evaluated here means high correlation factors with selected keywords due to the small data spread among fit songs group or unfit songs group. Symbol (-b) shows contradiction of customer sensitivities and a fluctuation of the feature words in contrast to one retrieve keyword is judged by mean deviation thereof. The small-fluctuated feature word indicates that a correlative characteristic is high and becomes a negative element of individual sensitivity.

As previously explained, a trend of appearance ratio of the feature words is extracted by the statistical manner from the above-described formulae (1) and (2).

On the other hand, when it is judged in the step S51 that the music piece has been skipped (namely, skipped in step S51), for example, a value "S3" and a value "S4" are calculated with respect to the respective feature words, based upon a statistical process operation from the music piece list of Fig. 5 (b) (namely, a list of music pieces which have been skipped). The value "S3" corresponds to one example of a positive non-coincident index value shown in the below-mentioned formula (3), and the value "S4" corresponds to one example of a negative incoincident index value indicated in the below-mentioned formula (4):

$$S3 = \Sigma \times (-a) \qquad (3)$$

$$S4 = \text{(with respect to factors whose mean deviation is}$$

$$\text{smaller than, or equal to "d") + b} \qquad (4)$$

In the above-described formula (3), symbol "Σ" shows a summation of appearing quantities of the value "1" in the each of feature words, and a constant "a" corresponds to a weighting constant (for example, 1.1), and implies similar meanings as explained in the formula (1).

In the above-described formula (4), a constant "b" corresponds to another weighting constant (for instance, 1.01), and implies a similar meaning as explained in the formula (2).

As previously explained, a trend of occurrence frequencies of feature words may be extracted by way of a statistical manner from the above-explained formulae (3) and (4).

Next, at a step S54, the four values S1 to S4 acquired in the step S52 and S53 are firstly added to each other so as to form a sensitive table of the latest "e" music pieces which are constituted by new correlative values. Namely, the latest "e" music pieces are equal to a total number of music pieces which are contained in the music piece list formed in the previous step S33 of Fig. 3.

$$\text{Table of latest "e" music pieces} = (S1 + S2 + S3 + S4) \qquad (5)$$

Subsequently, in this embodiment, more specifically, the old sensitivity table which has been used is multiplied by a "constant c" for a weighting calculation, and the two new/old sensitivity tables are added to each other by way of a weighting calculation, so that an updated sensitivity table is formed. It should be understood that since the old sensitivity table has been normalized when this old sensitivity table is formed, a recovery process operation has been carried out with respect to this old sensitivity table. Thereafter, as indicated in the below-mentioned formula (6), the recovered sensitivity table is added to the sensitivity table for the latest "e" music pieces in the weighting manner. Furthermore, after the weight-added sensitivity table is normalized as an entire sensitivity table, the normalized sensitivity table is defined as a sensitivity table which has been updated. In this case, a storage region of a normalizing amount "P" is secured.

$$\text{updated sensitivity table}$$

$$= \text{normalization} \left[ \{ (\text{old sensitivity table} \times 1/P) \times c \} \right.$$

$$\left. + \text{sensitivity table for latest "e" music pieces} \right] \qquad (6)$$

where:

symbol "P" indicates a normalizing amount; and
symbol "c" represents a weighting amount with respect to the old sensitivity table.

It should also be noted that the normalizing amount "P" is determined based upon an amount of data which should be normalized. Also, the weighting amount "c" corresponds to a weighting value between the old sensitivity table and the sensitivity table for the latest "e" music pieces. In the old sensitivity table, features of the past learning contents are implicated, whereas the sensitivity table for the latest "e" music pieces owns such a feature as to only learning contents which are produced (predicted) from, for example, only 10 music pieces. As a consequence, from a more fitting view point with respect to the personal sensitivities, weights thereof are different from each other. In this case, since the weighting amount "c" may give an influence to learning convergent time, this weighting amount must be fitted to the use feeling of the user.

As previously explained, a feature of a population in the statistical manner is extracted, and then, this extracted feature is reflected onto the sensitivity table corresponding to the personal sensitivities, and then, the learning thereof is carried out.

As previously described, in this embodiment, the on-vehicle electronic apparatus is constructed as follows: That is, on one hand, the positive index amounts (for example, positive coincident index value S1 and positive incoincident index value S3) are calculated based upon the feature words to which the user positively designates such an index value "1" that "positive correlation" is present when this index value is set among the feature words. On the other hand, the negative index amounts (for instance, negative coincident index value S2 and negative incoincident index value S4) are calculated based upon the feature word to which the user does not designate the index value "1".

Alternatively, instead of such a negative index amount, or in addition to such a negative index amount, when an index value of a feature word is set, the on-vehicle electronic apparatus may be arranged in such a manner that a negative index amount is calculated based upon a feature word to which the user positively designates such an index value "-1" that "negative correlation" is present. This designated feature word implies such a feature word that the user recognizes "not cheerful" with respect to the feature word "cheerful", and positively, or actively executes the input operation of the negation.

In the case that the on-vehicle electronic apparatus is arranged in such a manner, as to the negative index amount obtained from the index value "-1", either the coincident index amount or the incoincident index amount may be alternatively calculated in such a way that the weight is increased as compared with that of the negative index amount obtained from the index value "0", and then, the negative index amount thus obtained is added to the positive index amount obtained from the index value "1." In this case, the negative index amount obtained from the index value "-1" may be added to the positive index amount obtained from the index "1" with an equivalent weighting value.

Alternatively, as to the negative index amount obtained from the index value "-1", either the coincident index amount or the incoincident index amount may be alternatively calculated in such a way that the weight factor is increased as compared with that of the negative index amount obtained from the index value "0", and then, this negative index amount obtained from the index value "0" and the positive index amount obtained from the index value "1" are added to the negative index amount obtained from the index value "-1."

(II) Process operation executed based upon emotion-to-emotion learning algorithm:

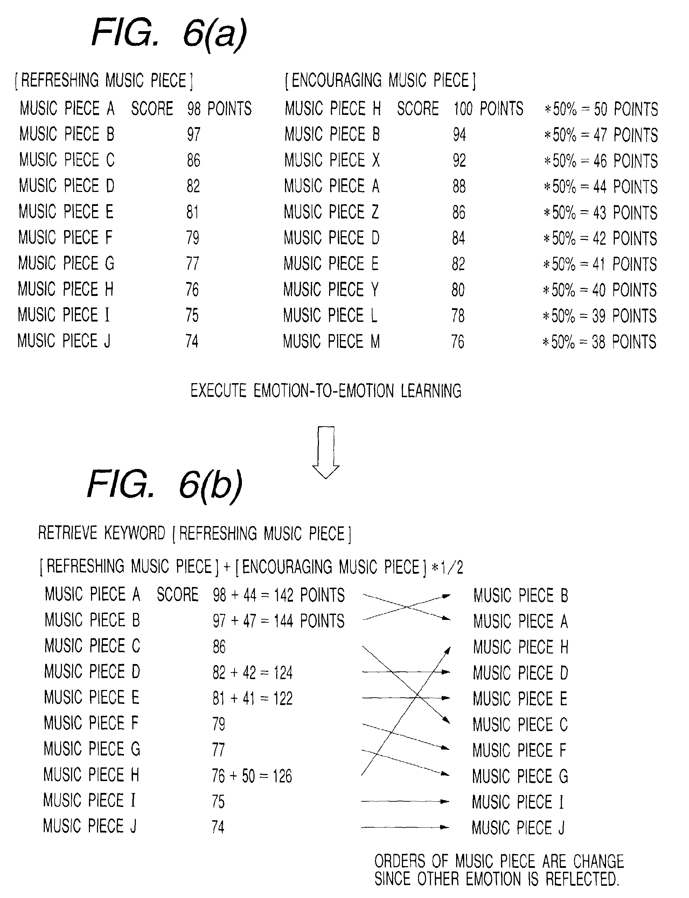

Next, "emotion-to-emotion learning algorithm" among the process operations executed based upon the learning algorithm will now be explained with reference to Fig. 6.

In this embodiment, "emotion-to-emotion learning algorithm" implies such a learning algorithm with respect to a selecting operation and a reproducing operation of a music piece corresponding to one retrieve keyword, namely learning algorithm capable of updating not only a sensitivity table portion as to this retrieve keyword, but also another sensitivity table portion as to another retrieve keyword. Otherwise, this "emotion-to-emotion learning algorithm" implies such an learning algorithm that as indicated in the step S32 of Fig. 3, the score is calculated not only as to one retrieve keyword in the internal emotion learning, but also another score calculated as to another retrieve keyword is added to the score as to this one retrieve keyword, so that music pieces are place in order or a list of music pieces is formed. In any case, such a process operation is curried out that when a feeling of a music piece which is wanted to be heard is specified, or "emotion" is specified, a result of a learning algorithm is reflected onto another feeling or "emotion."

Fig. 6 is a conceptual diagram for explaining correlative degrees of mutual music piece lists in a plurality of music piece lists which are formed with respect to two retrieve keywords.

In this embodiment, a new music piece list is formed by employing as a correlative degree among retrieve keywords, coincident degrees among mutual music piece lists in a plurality of music piece lists as to "n" music pieces every retrieve keyword. In this case, the correlative degree among the retrieve keywords is expressed by a coincident degree (correlative degree/relative degree) percent (%) of the mutual music piece lists within a plurality of music piece lists for "n" music pieces every retrieve keyword. This information is stored into the memory 61 of Fig. 1. When a personal sensitivity is selected, a score is calculated by considering this correlative degree among the retrieve keywords.

In Fig. 6(a), as a plurality of music piece lists containing "n" music pieces, "energetic music pieces" are indicated in the order of higher scores (namely, from music piece "A" to music piece "J") as explained in Fig. 2, and furthermore, "encouraging music pieces" are indicated in the order of higher scores (namely, music piece "H", ---, musci piece "A", ---, music piece "E", ---, music piece "M") as described in Fig. 2. It should be noted that the music piece "A" to the music piece "J" involved in "energetic music pieces" and those involved in "encouraging music pieces" are identical to each other. As to these "energetic music pieces (from music piece "A" to music piece "J"), scores (98 points to 74 pints) are stored, respectively, whereas as to these "encouraging music pieces (music piece "H", ---, music piece "A", ---, music piece "E", ---, music piece "M"), scores (100 points, ---, 88 points, ---, 82 points, ---, 76 points) are stored, respectively.

Furthermore, a right end of Fig. 6(a) indicates 50 % (1/2) scores of the above-described scores as to "encouraging music pieces." In other words, in this example, it is so assumed that a retrieve keyword-to-keyword correlative degree between both retrieve keywords is set to 50 %.

Then, as indicated in Fig. 6(b), since the emotion-to-emotion learning is carried out with respect to these plural music lists, the orders of these music pieces are replaced with each other, as compared with the case (namely, case of above-described emotion-to-emotion learning) shown in Fig. 6(a). This music piece replacement is performed in accordance with a calculation result of the following formula (7) as to the same music pieces (e.g., music piece "A" and music piece "A", ---,) with respect to "energetic music pieces" and "encouraging music pieces."

$$\text{score of "energetic music piece"}$$

$$+ (\text{score of "encouraging music piece"} \times 50\ \%) \tag{7}$$

For example, a score as to the music piece "A" contained in the "energetic music pieces" list becomes 98 + 44 = 142 points, and also, a score as to the music piece "B" contained in this list becomes 97 + 47 = 146 points. As a result, this music piece "A" is replaced with the music piece "B." A new music piece list in which this order is changed is formed. Then, the music piece list is displayed in this order of "music piece B" and "music piece A" corresponding to the sensitivity of the individual user, and furthermore, the music pieces are actually reproduced.

As previously explained, in accordance with the motion-to-motion learning algorithm, when the music list is formed and the sensitivity table is updated, the calculation result of such a score related to one retrieve keyword may be reflected to the calculation of the score related to another retrieve keyword by employing the retrieve keyword-to-keyword correlation degree, and also, the updating operation of the sensitivity table portion related to one retrieve keyword may be reflected to the updating operation of the sensitivity table portion related to another retrieve keyword. As a result,. inflexibility of the sensitivity tables can be prevented, such a sensitivity table which is furthermore fitted to the sensitivity of the individual user can be constituted within short time, and also, the music piece list which is furthermore fitted to the sensitivity of the individual user can be formed.

It should also be understood that in each of the above-described embodiments, the sorts of these retrieve keywords are fixed to those described in the sensitivity table as indicated in Fig. 2(a). Alternatively, in addition to such fixed retrieve keywords, or instead of these fixed retrieve keywords, a retrieve operation may be carried out by using free keywords whose sort is not specifically limited, or free keywords which are not listed in, at least, the sensitivity table shown in Fig. 2(a). In other words, even when such keywords are employed which are not listed in this sensitivity table, if these not-listed keywords may be finally related to some retrieve keywords which have been previously described in the sensitivity table shown in Fig. 2(a), then the above-described learning algorithm of this embodiment may be applied thereto in a substantially similar manner. For instance, a process operation in which one retrieve keyword is made in correspondence with an entry of a free keyword may be realized by that while a correspondence table between the free keywords and the retrieve keywords is separately provided, the control unit refers to this correspondence table every time the free keyword is inputted. Concretely speaking, assuming now that while the retrieve keyword "energetic music piece" has been set to the sensitivity table, retrieve keywords resembled to this retrieve keyword "energetic music piece" such as "---crisp music piece", "---brisk music piece" and "---refreshing music piece" are not set in this sensitivity table, when "---crisp music piece", "---brisk music piece", and "---refreshing music piece" are inputted as the free keyword, the control unit may extract the retrieve keyword "---??? music piece" which has been previously set in correspondence with this input free keyword by referring to the correspondence table. Thereafter, the control unit may execute a similar process operation to that of each of the embodiments by employing this retrieve keyword. Otherwise, while a knowledge database is previously prepared which may establish a relationship between an arbitrary free keyword and a retrieve keyword, every time a free keyword is entered, the control unit may predict one retrieve keyword corresponding to this inputted keyword by operating a prediction engine by referring to this knowledge database. Then, subsequently, the control unit may execute a similar process operation to that of each of these embodiments by employing this predicted retrieve keyword.

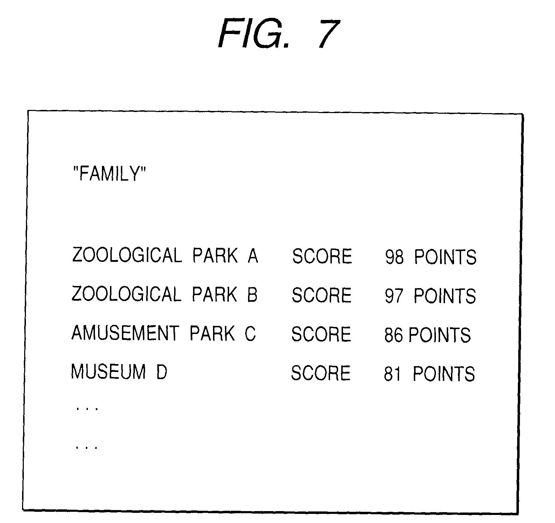

Referring now to Fig. 7, a description will be made of a modification in which names of spots (namely, names of tourist resorts) in a drive plan of a mobile is proposed by using the above-described algorithm of the respective embodiments.

In a system for forming either a drive plan or a travel plan of a mobile such as an automobile, a place to which a user drives to visit may be retrieved by employing, for example, both a retrieve keyword required by the user and a feature word given to each of spots. For instance, in such a case that there are "bustling", "deserted", "season", and the like as the feature words, whereas there are "family", "date", "group", and the like as the retrieve keywords, when the user enters "family" as the retrieve keyword, this system may judge that a correlation degree between "bustling" and "family" is high. Then, when "family" is given as the feature word with respect to a certain zoological park, this zoological park may be proposed to this user. In other words, in this modification, while the music pieces shown in Fig. 6(a) correspond to the spot names, when such a retrieve keyword as "family" is inputted, for example, a list of spot names indicated in Fig. 7 is displayed on display screen.

In the above-explained embodiment, the music selecting operation has been described as the information selecting operation. However, the information selecting operation executed based upon the learning algorithm, according to the present invention, may be applied (utilized) to various types of systems. In other words, this learning algorithm may be applied to various sorts.of systems as learning algorithm called as so-called "qualitative data" such as sensitivities of individuals and tastes of persons which can be hardly quantified by using numeral values. For instance, personal emotions and the like are previously stored as teacher data (dictionary data), and this teacher data may be applied to a limited simulation within this range. Also, a simulator capable of executing this simulation may be mounted on an intelligence robot by forming a character.

Furthermore, in the learning algorithm according to the present invention, various sorts of retrieving operations corresponding to the ranges for each of the personalities may be carried out by a tracking system in a database apparatus. For instance, the learning algorithm of the present invention may be applied to a retrieve service of publications (books) in correspondence with each personality, and also applied to a guide service capable of providing a title, an abstract, and an index of this publication.

Also, in the above-explained embodiments, as shown in Fig. 2(a), both the retrieve keywords and the feature words have been explained based upon a so-called "table in a narrow sense" in which these retrieve keywords and feature words are arranged in a longitudinal/transverse relationship. However, the present invention is not limited only to such a table in a narrow-sense, but may be applied to various information arrangements. For example, while numbers are applied to the retrieve keywords and the feature words, a table in a wide sense or a correspondence table in a wide sense may be logically constituted on a memory by utilizing these numbers, a process operation similar to the above-described process operation may be carried out.

While the present invention has been described in detail, the present invention is not limited only to the above-described embodiments, but may be properly modified, changed, or substituted based upon the gist of the present invention readable from the scope of claims of a patent, and also the entire patent specification, as well as the technical scope and spirit of the present invention. Also, information selecting apparatus and information selecting methods, information selecting/reproducing apparatus, and further, computer programs capable of selecting information, which correspond to such a modified learning algorithm every individual sensitivities may also be involved in the technical scope and spirit of the present invention.

As previously described in detail, in accordance with the present invention, there are the following effects that

**EP 1 304 628 A2**

the information selecting operations (especially, music piece is selected) in correspondence with each of the individual sensitivities can be easily and firmly carried out within short time based upon the learning algorithm. Furthermore, this information selecting operation can be readily changed at the user use stage, and this information selecting operation can be changed without cumbersome works performed by experts.

**Claims**

1.  An information selecting apparatus **characterized by** comprising:

    a feature data list containing a plurality of index values of a plurality of feature data previously set and indicative of various sorts of featured contents of a plurality of contents information including at least one of voice information, picture information, and text information;
    user-dependable sensitivity tables, which can be updated and include a plurality of correlative values between the plurality of feature data and a plurality of retrieve keys used to retrieve the plurality of contents information;
    acquiring means for acquiring the retrieve key;
    selection means operated in such a manner that when one retrieve key is acquired by the acquiring means, at least one contents information, which is coincident with the one retrieve key, is selected from the plurality of contents information on the basis of both the sensitivity table and the feature data list;
    judgment means for judging as to whether or not each of the selected contents information is coincident with the one retrieve key on the basis of an individual judgment by a user;
    first statistical processing means for quantifying relevancy between the one retrieve key and each of the plurality of feature data, with respect to the contents information judged to be coincident with the one retrieve key by the judgement means, in a statistical manner based on the index values with respect to the feature data stored in the corresponding feature data list to obtain a coincident index amount;
    second statistical processing means for quantifying relevancy between the one retrieve key and each of the plurality of feature data, with respect to the contents information judged not to be coincident with the one retrieve key by the judgement means, in a statistical manner based on the index values with respect to the feature data stored in the corresponding feature data list to obtain a incoincident index amount;
    calculation means for calculating a new correlative values between the one retrieve key and the plural feature data, respectively, based on the coincident index amount and the incoincident index amount; and
    update means for updating a portion of the sensitivity table, which is related to the one retrieve key, by using the new correlative value calculated by the calculation means.

2.  The information selecting apparatus according to claim 1, **characterized in that**:
    wherein the selection means places the plurality of contents information in the order of coincident degree with the one retrieve key on the basis of the sensitivity table and the feature data list; and
    wherein the selection means selects at least one contents information, the coincident degree orders of which are upper-grade orders.

3.  The information selecting apparatus according to claim 2, **characterized in that**:
    wherein the selection means calculates a summation of values obtained by multiplying each of the correlative values in the sensitivity table by the index values in the corresponding feature data with respect to each of the plural contents information; and
    wherein the selection means places the plurality of contents information in the order of the summation values.

4.  The information selecting apparatus according to claim 2 or 3, **characterized in that**:
    wherein the selection means takes into consideration coincident degree of another retrieve key with the plurality of contents information, the another retrieve key having a predetermined relation with the one retrieve key, when the selection means places the plurality of contents information in the order of the coincident degree with the one retrieve key.

5.  The information selecting apparatus according to claim 4, **characterized in that**:
    wherein the selection means takes into consideration the coincident degree of the another retrieve key with the plurality of contents information based on a previously-set retrieve key-to-key correlative degree indicating degree of the predetermined relationship among the plural retrieve keys, when the selection means places the plurality of contents information in the order of the coincident degree with the one retrieve key.

**6.** The information selecting apparatus according to any one of claims 1 to 5, **characterized in that:**
wherein the calculation means calculates a normalized correlative value as the correlative value.

**7.** The information selecting apparatus according to any one of claims 1 to 6, **characterized in that:**
wherein the calculation means calculates the correlative value by inverting the symbol of the incoincident index amount and adding the symbol-inverted incoincident index amount to the coincident index amount.

**8.** The information selecting apparatus according to any one of claims 1 to 7, **characterized in that**:
wherein the update means updates the sensitivity table by weighting and adding the calculated new correlative value to the correlative value corresponding thereto, which is stored in the sensitivity table.

**9.** The information selecting apparatus according to any one of claims 1 to 8, **characterized in that**:
wherein the index value of the feature data is constituted by two values indicating as to whether or not a feature is present.

**10.** The information selecting apparatus according to any one of claims 1 to 9, **characterized in that:**
wherein the first statistical processing means calculates a positive coincident index amount as to such a feature data to which the index value is designated by the user when the feature data list is set;
wherein the first statistical processing means calculates a negative coincident index amount as to such a feature data to which the index value is not designated by the user when the feature data list is set; and
wherein the first statistical processing means adds the positive coincident index amount and the negative coincident index amount by giving an essentially large weight to the positive coincident index amount as compared with the negative coincident index amount, to calculate the coincident index amount.

**11.** The information selecting apparatus according to claim 10, **characterized in that**:
wherein the first statistical processing means calculates the negative coincident index amount based on the index value of the feature data having a fluctuation in mean deviation smaller than a predetermined threshold value.

**12.** The information selecting apparatus according to any one of claims 1 to 11, **characterized in that:**
wherein the second statistical processing means calculates a positive incoincident index amount as to such a feature data to which the index value is designated by the user when the feature data list is set;
wherein the second statistical processing means calculates a negative incoincident index amount as to such a feature data to which the index value is not designated by the user when the feature data list is set; and
wherein the second statistical processing means adds the positive incoincident index amount and the negative incoincident index amount by giving an essentially large weight to the positive incoincident index amount as compared with the negative incoincident index amount, to calculate the incoincident index amount.

**13.** The information selecting apparatus according to claim 12, **characterized in that**:
wherein the second statistical processing means calculates the negative incoincident index amount based on the index value of the feature data having a fluctuation in mean deviation smaller than a predetermined threshold value.

**14.** The information selecting apparatus according to any one of claims 1 to 13, **characterized in that**::
wherein the calculation means calculates a correlative value between each of the plurality of feature data and another retrieve key having a predetermined relationship with the one retrieve key based on the coincident index amount and the incoincident index amount; and
wherein the update means updates a portion related to the another retrieve key within the sensitivity table.

**15.** The. information selecting apparatus according to claim 14, **characterized in that:**
wherein the calculation means calculates the correlative values between the another retrieve key and each of plurality of feature data based on a previously-preset retrieve key-to-key correlative degree indicating degree of the predetermined relationship among the plural retrieve keys.

**16.** The information selecting apparatus according to any one of claims 1 to 15, **characterized by** further comprising retrieve means for retrieving a retrieve key related to a free key among the plurality of retrieve keys,
wherein the acquiring means is constituted by that the free key can be acquired instead of or in addition to the retrieve key; and
wherein the information selecting apparatus further comprises retrieving means for retrieving a retrieve key, which relates to the free key, among the plurality of retrieve keys.

**17.** An information selecting method used in an information selecting apparatus having:

a feature data list containing a plurality o.f index values of a plurality of feature data previously set and indicative of various sorts of featured contents of a plurality of contents information including at least one of voice information, picture information, and text information; and

user-dependable sensitivity tables, which can be updated and include a plurality of correlative values between the plurality of feature data and a plurality of retrieve keys used to retrieve the plurality of contents information,

the information selecting method **characterized by** comprising the steps of:

acquiring one retrieve key;

selecting at least one of the plurality of contents information, the at least one contents information being coincident with the one retrieve key, on the basis of the sensitive table and the feature data list when the one retrieve key is acquired in the acquiring step;

judging as to whether or not each of the selected contents information is coincident with the one retrieve key on the basis of an individual judgment by a user;

quantifying relevancy between the one retrieve key and each of the plurality of feature keys, with respect to the contents information judged to be coincident with the one retrieve key in the judging step, in a statistical manner based on the index values with respect to the feature data stored in the corresponding feature data list to obtain a coincident index amount;

quantifying relevancy between the one retrieve key and each of the plurality of feature data, with respect to the contents information judged not to be coincident with the one retrieve key in the judging step, in a statistical manner based on the index values with respect to the feature data stored in the corresponding feature data list to obtain a incoincident index amount;

calculating a new correlative values between the one retrieve key and the plurality of feature data, respectively, based on the coincident index amount and the incoincident index amount; and

updating a portion of the sensitivity table, which is related to the one retrieve key, by using the new correlative value calculated.

**18.** The information selecting method according to claim 17, **characterized in that:**

wherein in the selecting step, the plurality of contents information is placed in the order of coincident degree with the one retrieve key on the basis of the sensitivity table and the feature data list; and

wherein in the selecting step, at least one contents information is selected, the coincident degree orders of which are upper-grade orders.

**19.** The information selecting method according to claim 18, **characterized in that:**

wherein in the selecting step, coincident degree of another retrieve key with the plurality of contents information is taken into consideration, the another retrieve key having a predetermined relation with the one retrieve key, when in the selection step, the plurality of contents information is placed in the order of the coincident degree with the one retrieve key.

**20.** An information selecting/reproducing apparatus **characterized by** comprising:

an information selecting apparatus including:

a feature data list containing a plurality of index values of a plurality of feature data previously set and indicative of various sorts of featured contents of a plurality of contents information including at least one of voice information, picture information, and text information;

user-dependable sensitivity tables, which can be updated and include a plurality of correlative values between the plurality of feature data and a plurality of retrieve keys used to retrieve the plurality of contents information;

acquiring means for acquiring one retrieve key;

selection means operated in such a manner that when the one retrieve key is acquired by the acquiring means, at least one contents information, which is coincident with the one retrieve key, is selected from the plurality of contents information on the basis of both the sensitivity table and the feature data list;

judgment means for judging as to whether or not each of the selected contents information is coincident with the one retrieve key on the basis of an individual judgment by a user;

first statistical processing means for quantifying relevancy between the one retrieve key and each of the plurality of feature data, with respect to the contents information judged to be coincident with the one retrieve key by the judgement means, in a statistical manner based on the index values with respect to the feature data stored in the corresponding feature data list to obtain a coincident index amount;

second statistical processing means for quantifying relevancy between the one retrieve key and each of the plurality of feature data, with respect to the contents information judged not to be coincident with the one retrieve key by the judgement means; in a statistical manner based on the index values with respect to the feature data stored in the corresponding feature data list to obtain a incoincident index amount

calculation means for calculating a new correlative values between the one retrieve key and the plural feature data, respectively, based on the coincident index amount and the incoincident index amount; and

update means for updating a portion of the sensitivity table, which is related to the one retrieve key, by using the new correlative value calculated by the calculation means;

storage means for storing thereinto the plurality of contents information; and

reproducing means for reproducing the at least one of the plurality of contents information selected by the selection means.

**21.** The information selecting/reproducing apparatus according to claim 20, **characterized by** further comprising:

list representing means for representing an information list in which titles of the at least one of the plurality of contents information selected by the selection means are arranged; and

skip means capable of externally designating as to whether or not a reproducing operation of the contents information corresponding to each of titles under representing condition by the list. representing means is skipped,

wherein the judgement means judges as to whether or not the contents information is coincident with the one retrieve key in response to such a fact as to whether or not the reproducing operation of the corresponding contents information is skipped.

**22.** The information selecting/reproducing apparatus according to claim 20 or 21, **characterized by** further comprising:

skip means capable of externally designating as to whether or not a reproducing operation of the contents information under reproducing condition by the reproducing means is skipped,

wherein the judgment means judges as to whether or not the contents information is coincident with the one retrieve key in response to such a fact as to whether or not the reproducing operation of the contents information is skipped.

**23.** A computer program capable of causing a computer to function as an information selecting apparatus having.:

a feature data list containing a plurality of index values of a plurality of feature data previously set and indicative of various sorts of featured contents of a plurality of contents information including at least one of voice information, picture information; and text information; and

user-dependable sensitivity tables, which can be updated and include a plurality of correlative values between the plurality of feature data and a plurality of retrieve keys used to retrieve the plurality of contents information,

the computer program **characterized by** comprising the steps of:

acquiring one desirable retrieve key;

selecting at least one of the plurality of contents information, the at least one contents information being coincident with the one retrieve key, on the basis of the sensitive table and the feature data list when the one retrieve key is acquired in the acquiring step;

judging as to whether or not each of the selected contents information is coincident with the one retrieve key on the basis of an individual judgment by a user;

quantifying relevancy between the one retrieve key and each of the plurality of feature data, with respect to the contents information judged to be coincident with the one retrieve key in the judging step, in a statistical manner based on the index values with respect to the feature data stored in the corresponding feature data list to obtain a coincident index amount;

quantifying relevancy between the one retrieve key and each of the plurality of feature data, with respect to the contents information judged not to be coincident with the one retrieve key in the judging step, in a statistical manner based on the index values with respect to the feature data stored in the corresponding feature data list to obtain a incoincident index amount

calculating a new correlative values between the one retrieve key and the plurality of feature data, respectively, based on the coincident index amount and the incoincident index amount; and

updating a portion of the sensitivity table, which is related to the one retrieve key, by using the new correlative value calculated.

**24.** A computer program capable of causing a computer to function as an information selecting/reproducing apparatus having:

a feature data list containing a plurality of index values of a plurality of feature data previously set and indicative of various sorts of featured contents of a plurality of contents information including at least one of voice information, picture information, and text information;

user-dependable sensitivity tables, which can be updated and include a plurality of correlative values between the plurality of feature data and a plurality of retrieve keys used to retrieve the plurality of contents information;

the computer program **characterized by** comprising the steps of:

acquiring one retrieve key;

selecting at least one of the plurality of contents information, the at least one contents information being coincident with the one retrieve key, on the basis of the sensitive table and the feature data list when the one retrieve key is acquired in the acquiring step;

judging as to whether or not each of the selected contents information is coincident with the one retrieve key on the basis of an individual judgment by a user;

quantifying relevancy between the one retrieve key and each of the plurality of feature data, with respect to the contents information judged to be coincident with the one retrieve key in the judging step, in a statistical manner based on the index values with respect to the feature data stored in the corresponding feature data list to obtain a coincident index amount;

quantifying relevancy between the one retrieve key and each of the plurality of feature data, with respect to the contents information judged not to be coincident with the one retrieve key in the judging step, in a statistical manner based on the index values with respect to the feature data stored in the corresponding feature data list to obtain a incoincident index amount

calculating a new correlative values between the one retrieve key and the plurality of feature data, respectively, based on the coincident index amount and the incoincident index amount; and

updating a portion of the sensitivity table, which is related to the one retrieve key, by using the new correlative value calculated;

storing the plurality of contents information; and

reproducing the at least one of the plurality of contents information selected by the selection means.

# FIG. 1

103

NAVIGATION
PROCESS
SYSTEM

100

30

40

42 — BUFFER MEMORY

41 — GRAPHIC CONTROLLER

40 — DISPLAY UNIT

44 — DISPLAY

62 — SPEECH RECOGNITION PROCESS UNIT

38 — COMMUNICATION DEVICE

101

MPU
CPU
RAM   ROM
20

60 — INPUT DEVICE

33

34

31 — CD DRIVE

32 — DVD DRIVE

63 — COMPRESSION/ EXPANSION PROCESS UNIT

61 — MEMORY

50

102

36 — HDD

53a

51 — D/A CONVERTER

52 — VARIABLE GAIN AMPLIFIER

53b

## FIG. 2(a)   SENSITIVITY TABLE

| FEATURE WORD / RETRIEVE KEYWORD | CHEERFUL | DARK | JOYFUL | VITALITY | GOOD ACCOMPANIMENT | · · · |
|---|---|---|---|---|---|---|
| CHEERFUL MUSIC PIECE | 0.9 | −0.6 | 0.7 | 0.8 | 0.85 | · · · |
| REFRESHING MUSIC PIECE | 0.5 | −0.9 | 0.8 | 0.9 | 0.9 | · · · |
| INTERESTING MUSIC PIECE | 0.3 | 0.2 | 0.5 | 0.7 | 0.4 | · · · |
| · · · | · · · | · · · | · · · | · · · | · · · | · · · |

## FIG. 2(b)   FEATURE WORD LIST

| | CHEERFUL | DARK | JOYFUL | VITALITY | GOOD ACCOMPANIMENT | · · · |
|---|---|---|---|---|---|---|
| FEATURE WORD OF MUSIC PIECE A | 1 | 0 | 1 | 1 | 1 | · · · |

| | CHEERFUL | DARK | JOYFUL | VITALITY | GOOD ACCOMPANIMENT | · · · |
|---|---|---|---|---|---|---|
| FEATURE WORD OF MUSIC PIECE B | 1 | 1 | 0 | 1 | 0 | · · · |

| | CHEERFUL | DARK | JOYFUL | VITALITY | GOOD ACCOMPANIMENT | · · · |
|---|---|---|---|---|---|---|
| FEATURE WORD OF MUSIC PIECE C | 0 | 1 | 0 | 0 | 0 | · · · |

| | CHEERFUL | DARK | JOYFUL | VITALITY | GOOD ACCOMPANIMENT | · · · |
|---|---|---|---|---|---|---|
| FEATURE WORD OF MUSIC PIECE D | 1 | 0 | 1 | 1 | 1 | · · · |

| | CHEERFUL | DARK | JOYFUL | VITALITY | GOOD ACCOMPANIMENT | · · · |
|---|---|---|---|---|---|---|
| FEATURE WORD OF MUSIC PIECE E | 1 | 0 | 1 | 1 | 1 | · · · |

· · ·
· · ·
· · ·

# FIG. 3

START

START PROCESS OPERATION — S30

WANT TO HEAR "CHEERFUL MUSIC PIECE"

EXECUTE INPUT PROCESS OPERATION — S31

FEATURE WORD LIST

CALCULATE SCORE — S32

SENSITIVITY TABLE

FORM MUSIC PIECE LIST — S33

EXECUTE LEARNING ALGORITHM — S34

# FIG. 4

```
                    ┌──────────┐
                    │  START   │
                    └──────────┘
                         │
                         ▼
                ┌─────────────────┐ ⟋S50
                │ START LEARNING  │
                │ ALGORITHM       │
                │ PROCESS         │
                │ OPERATION       │
                └─────────────────┘
                         │
                         ▼
                      ╱──────╲  ⟋S51                PRESENT
                    ╱   SKIP    ╲──────────────────────────┐
                  ╱ IS PRESENT/ABSENT ╲                    │
                    ╲     ?     ╱                           │
                      ╲──────╱                              │
                         │ ABSENT                           │
  ┌────────────┐         ▼                                  ▼
  │ FEATURE    │  ┌─────────────────┐ ⟋S52      ┌─────────────────┐ ⟋S53
  │ WORD       │--│ STATISTICAL     │ --------> │ STATISTICAL     │
  │ LIST       │  │ PROCESS         │           │ PROCESS         │
  └────────────┘  │ OPERATION       │           │ OPERATION       │
                  │ ADAPTED TO      │ --------> │ ADAPTED TO      │
                  │ "NO SKIPPING"   │           │ "SKIPPING"      │
  ┌────────────┐  └─────────────────┘           └─────────────────┘
  │ SENSITIVITY│     │  (VALUES S1, S2)            (VALUES S3, S4)
  │ TABLE      │-----┘                                      │
  └────────────┘         │                                  │ −
      │   ▲              │ +                                 │
      │   │              ◄──────────────────────────────────┘
      │   │ UPDATE       ▼
      │   └──────── ┌─────────────┐ ⟋S54
      └─────────────│ FORM NEW    │
                    │ TABLE       │
                    └─────────────┘
                         │
                         ▼
                    ┌──────────┐
                    │  RETURN  │
                    └──────────┘
```

# FIG. 5(a)

FEATURE WORD LIST RELATED TO MUSIC PIECES WHICH ARE NOT SKIPPED

(RETRIEVE KEYWORD "REFRESHING MUSIC PIECE") :

| | CHEERFUL | DARK | JOYFUL | VITALITY | GOOD ACCOMPANIMENT | ... |
|---|---|---|---|---|---|---|
| FEATURE WORD OF MUSIC PIECE B | 1 | 1 | 0 | 1 | 0 | ... |
| FEATURE WORD OF MUSIC PIECE C | 0 | 1 | 0 | 0 | 0 | ... |
| ... | | | | | | |

↓ ↓ ↓

| S1 AND S2 ARE CALCULATED FROM ABOVE-DESCRIBED MUSIC PIECE LIST BY STATISTICAL MANNER |
|---|

# FIG. 5(b)

FEATURE WORD LIST RELATED TO MUSIC PIECES WHICH ARE SKIPPED

(RETRIEVE KEYWORD "REFRESHING MUSIC PIECE") :

| | CHEERFUL | DARK | JOYFUL | VITALITY | GOOD ACCOMPANIMENT | ... |
|---|---|---|---|---|---|---|
| FEATURE WORD OF MUSIC PIECE D | 1 | 0 | 1 | 1 | 1 | ... |
| FEATURE WORD OF MUSIC PIECE E | 1 | 0 | 1 | 1 | 1 | ... |
| ... | | | | | | |

↓ ↓ ↓

| S3 AND S4 ARE CALCULATED FROM ABOVE-DESCRIBED MUSIC PIECE LIST BY STATISTICAL MANNER |
|---|

# FIG. 6(a)

[REFRESHING MUSIC PIECE]

| | | |
|---|---|---|
| MUSIC PIECE A | SCORE | 98 POINTS |
| MUSIC PIECE B | | 97 |
| MUSIC PIECE C | | 86 |
| MUSIC PIECE D | | 82 |
| MUSIC PIECE E | | 81 |
| MUSIC PIECE F | | 79 |
| MUSIC PIECE G | | 77 |
| MUSIC PIECE H | | 76 |
| MUSIC PIECE I | | 75 |
| MUSIC PIECE J | | 74 |

[ENCOURAGING MUSIC PIECE]

| | | | |
|---|---|---|---|
| MUSIC PIECE H | SCORE | 100 POINTS | *50% = 50 POINTS |
| MUSIC PIECE B | | 94 | *50% = 47 POINTS |
| MUSIC PIECE X | | 92 | *50% = 46 POINTS |
| MUSIC PIECE A | | 88 | *50% = 44 POINTS |
| MUSIC PIECE Z | | 86 | *50% = 43 POINTS |
| MUSIC PIECE D | | 84 | *50% = 42 POINTS |
| MUSIC PIECE E | | 82 | *50% = 41 POINTS |
| MUSIC PIECE Y | | 80 | *50% = 40 POINTS |
| MUSIC PIECE L | | 78 | *50% = 39 POINTS |
| MUSIC PIECE M | | 76 | *50% = 38 POINTS |

EXECUTE EMOTION-TO-EMOTION LEARNING

# FIG. 6(b)

RETRIEVE KEYWORD [REFRESHING MUSIC PIECE]

[REFRESHING MUSIC PIECE] + [ENCOURAGING MUSIC PIECE] *1/2

| | | | |
|---|---|---|---|
| MUSIC PIECE A | SCORE | 98 + 44 = 142 POINTS | MUSIC PIECE B |
| MUSIC PIECE B | | 97 + 47 = 144 POINTS | MUSIC PIECE A |
| MUSIC PIECE C | | 86 | MUSIC PIECE H |
| MUSIC PIECE D | | 82 + 42 = 124 | MUSIC PIECE D |
| MUSIC PIECE E | | 81 + 41 = 122 | MUSIC PIECE E |
| MUSIC PIECE F | | 79 | MUSIC PIECE C |
| MUSIC PIECE G | | 77 | MUSIC PIECE F |
| MUSIC PIECE H | | 76 + 50 = 126 | MUSIC PIECE G |
| MUSIC PIECE I | | 75 | MUSIC PIECE I |
| MUSIC PIECE J | | 74 | MUSIC PIECE J |

ORDERS OF MUSIC PIECE ARE CHANGE
SINCE OTHER EMOTION IS REFLECTED.

# FIG. 7

"FAMILY"

| | | |
|---|---|---|
| ZOOLOGICAL PARK A | SCORE | 98 POINTS |
| ZOOLOGICAL PARK B | SCORE | 97 POINTS |
| AMUSEMENT PARK C | SCORE | 86 POINTS |
| MUSEUM D | SCORE | 81 POINTS |
| . . . | | |
| . . . | | |